# EUROPEAN PATENT APPLICATION

(11) **EP 4 579 424 A1**
(43) Date of publication of application: **02.07.2025**
(21) Application number: 23867005.3
(22) Date of filing: 15.06.2023
(51) Int. Cl.: G06F 3/06

(54) **DATA ACCESS METHOD, SYSTEM AND NODE**

(30) Priority: 24.09.2022 CN 202211168680; 12.12.2022 CN 202211598398
(71) Applicant: Huawei Technologies Co., Ltd., Shenzhen, Guangdong 518129 (CN)
(72) Inventor: GISSIN, Victor, Shenzhen, Guangdong 518129 (CN); GUREVICH, Elena, Shenzhen, Guangdong 518129 (CN); LUO, Siwei, Shenzhen, Guangdong 518129 (CN)
(74) Representative: Goddar, Heinz J.
(86) International application number: PCT/CN2023/100489
(87) International publication number: WO 2024/060709

(57) **Abstract**

A data access method and system (10), and a node are provided. Data in a storage node (30, 300) is stored in a form of an array, that is, the data may be an element in the array or data included in an element in the array. A computing node (20) sends a get command to the storage node (30, 300) based on NVMe, where the get command is used to request to obtain one or more first elements from an array. The storage node (30, 300) reads the one or more first elements from the array based on the get command. The storage node (30, 300) sends a response to the get command to feed back the one or more first elements to the computing node (20). When the computing node (20) needs to obtain the one or more first elements, the computing node (20) only needs to initiate one get command, and does not need to send a plurality of get commands. This can effectively reduce a quantity of interactions between the computing node (20) and the storage node (30, 300), and reduce communication overheads.

## Description

### CROSS-REFERENCE TO RELATED APPLICATIONS

This application claims priority to Chinese Patent Application No. 202211168680.9, filed with the China National Intellectual Property Administration on September 24, 2022 and entitled "DATA PROCESSING SYSTEM", and to Chinese Patent Application No. 202211598398.4, filed with the China National Intellectual Property Administration on December 12, 2022 and entitled "DATAACCESS METHOD AND SYSTEM, AND NODE", both ofwhich are incorporated herein by reference in their entireties.

### TECHNICAL FIELD

This application relates to the field of communications technologies, and in particular, to a data access method and system, and a node.

### BACKGROUND

In the field of artificial intelligence, a large amount of complex computing can be implemented by using a machine learning model or a neural network model. Before these models are put into use, the models need to be trained to find suitable model parameters.

Generally, a plurality of iterations are needed in a model training process. Each iteration may be completed cooperatively by a storage node having a large storage space and a computing node having a strong data computing capability. The storage node stores a to-be-trained model parameter in the iteration, and the computing node obtains the to-be-trained model parameter from the storage node, to complete each iteration. After each iteration is completed, the computing node may feed back a trained model parameter to the storage node, so that the storage node stores the model parameter obtained through the iteration. Then, the computing node obtains, from the storage node, a model parameter to be trained in a next iteration, to perform the next iteration.

The computing node may access the storage node through a non-volatile memory host controller interface (non-volatile memory express, NVMe), to obtain a to-be-trained model parameter or store a trained model parameter in the storage node. In the storage node, any model parameter is stored in a form of a key-value pair. A value (value) in a key-value pair is a model parameter, and a key (key) in the key-value pair is an index of the model parameter. When the computing node may access the storage node through the NVMe, a plurality of to-be-trained model parameters needed for one iteration are obtained. The computing node needs to initiate a plurality of get (get) commands based on the NVMe, to obtain the plurality of to-be-trained model parameters. It can be learned that, to obtain a to-be-trained model parameter needed for one iteration, signaling needs to be exchanged between the computing node and the storage node for a plurality of times, and consequently communication overheads are high.

### SUMMARY

This application provides a data access method and system, and a node, to reduce communication overheads of two nodes that interact with each other based on NVMe.

According to a first aspect, an embodiment of this application provides a data access method. The method is applied to a computing node and a storage node that interact with each other based on NVMe. Data in the storage node is stored in a form of an array, that is, the data may be an element in the array or data included in an element in the array. In the method, the computing node sends a get (get) command to the storage node based on the NVMe, where the get command is used to request to obtain one or more first elements from an array. After obtaining the get command, the storage node may read the one or more first elements from the array based on the get command, and then sends a response to the get command to feed back the one or more first elements to the computing node. The storage node may feed back, to the computing node, a response indicating that the first element is successfully read, and send the one or more first elements to the storage node in a data transmission mode mentioned in the NVMe.

According to the foregoing method, data is stored in the storage node in a form of an array. When the computing node needs to obtain data, the computing node may obtain the one or more first elements from the array by using the get command. In other words, when the computing node needs to obtain the one or more first elements, the computing node needs to initiate only one get command, and does not need to send a plurality of get commands. This can effectively reduce a quantity of interactions between the computing node and the storage node, and reduce communication overheads.

In a possible implementation, the get command carries an identifier of the one or more first elements, and the identifier of the one or more first elements identifies the one or more first elements. When reading the one or more first elements from the array based on the get command, the storage node reads the one or more first elements from the array based on the identifier of the one or more first elements.

According to the foregoing method, because the get command carries the identifier of the one or more first elements, the storage node can determine, based on the identifier of the one or more first elements, the one or more first elements needed by the computing node. This ensures that the computing node can obtain the one or more first elements from the storage node by using the get command, thereby reducing a quantity of interactions between the computing node and the storage node.

In a possible implementation, there are many scenarios in which the computing node and the storage node interact with each other based on the NVMe. One possible scenario is described herein. In a model training scenario, when the computing node needs to perform one iteration, the computing node obtains, from the storage node, a to-be-trained model parameter needed for the iteration. In other words, the one or more first elements may be a to-be-trained model parameter needed to complete one iteration of model training by the computing node. After obtaining the one or more first elements from the array based on the response to the get command, the computing node may complete the one iteration of the model training by using the one or more first elements.

According to the foregoing method, in the model training scenario, the computing node only needs to send the get command to obtain the to-be-trained model parameter needed for the one iteration, and does not need to initiate get commands for a plurality of times. This reduces a quantity of interactions between the computing node and the storage node, and improves model training efficiency.

In a possible implementation, the get command further carries an identifier of the array, and the identifier of the array identifies the array.

According to the foregoing method, the get command carries the identifier of the array, so that the storage node can quickly locate, by using the identifier of the array, the array in which the one or more first elements are located, obtain the one or more first elements as soon as possible, and feed back the one or more first elements to the computing node.

In a possible implementation, in addition to obtaining data in the storage node based on the NVMe, the computing node may further store data in the storage node based on the NVMe, that is, publish the data to the storage node. For example, the computing node sends a post (post) command to the storage node based on the NVMe, where the post command is used to request to store one or more second elements in the array. The storage node updates the one or more second elements to the array based on the post command after receiving the post command.

According to the foregoing method, when the computing node needs to publish data, the computing node may obtain the one or more second elements from the array by using the post command. In other words, when the computing node needs to publish the one or more second elements, the computing node needs to initiate only one post command, and does not need to send a plurality of post commands. This reduces communication overheads of the computing node and the storage node.

In a possible implementation, the model training scenario is still used as an example. The one or more second elements may be a trained model parameter generated through the one iteration of the model training by the computing node by using the one or more first elements. When updating the one or more second elements to the array, the storage node may update the one or more first elements in the array by using the one or more second elements. For example, the one or more first elements are updated to the one or more second elements. For another example, the one or more second elements are first processed, and the one or more first elements are updated to one or more processed second elements.

According to the foregoing method, in the model training scenario, the computing node only needs to send the post command to publish the trained model parameter generated through the one iteration to the storage node, and does not need to initiate get commands for a plurality of times. This avoids a plurality of interactions between the computing node and the storage node, and improves model training efficiency.

In a possible implementation, the post command carries an identifier of the one or more second elements.

According to the foregoing method, the post command carries the identifier of the one or more second elements, so that the storage node can determine the one or more second elements that need to be published, thereby facilitating updating the one or more second elements to the array.

In a possible implementation, an identifier of the one or more second elements that is carried in the post command is the same as the identifier of the one or more first elements that is carried in the get command. In the model training scenario, the to-be-trained model parameter needs to be updated to the trained model parameter. Therefore, the identifier of the one or more second elements is the same as the identifier of the one or more first elements, and the storage node can determine, from the array by using the identifier of the one or more second elements, the one or more first elements that need to be updated.

In a possible implementation, the post command carries a version of the one or more second elements, and the version is used to indicate the one iteration for generating the one or more second elements.

According to the foregoing method, the post command carries the version of the one or more second elements, to ensure that the storage node can determine a specific iteration for generating the trained model parameter, namely, the one or more second elements carried in the post command. This ensures that the storage node can store one or more second elements generated in different iterations.

In a possible implementation, in model training parameters, the storage node can obtain one or more groups of elements from the computing node, where each group of elements is a trained model parameter generated through one iteration. For the plurality of groups of elements, the storage node may perform one round of aggregation, aggregate the plurality of groups of elements in the round of aggregation, and update an original obtained through the aggregation to the array, where each group of elements includes the one or more second elements.

According to the foregoing method, the storage node can perform aggregation processing on the plurality of groups of elements, that is, can perform aggregation processing on a plurality of post commands, thereby improving working efficiency on the storage node side. In addition, in the model training scenario, if model training may be allocated to a plurality of computing nodes or a plurality of workers (workers) of a computing node for execution, the storage node can aggregate a plurality of groups of elements fed back by the plurality of computing nodes or the plurality of workers (workers). This ensures that the storage node can store a trained model parameter in time, thereby improving model training efficiency.

According to a second aspect, this application further provides a data access system. The data access system includes a storage node and a computing node, and can implement the method in the first aspect. For beneficial effects, refer to the descriptions of the first aspect. Details are not described herein again. In the system, the computing node sends a get (get) command to the storage node based on NVMe, where the get command is used to request to obtain one or more first elements from an array. The storage node reads the one or more first elements from the array based on the get command. The storage node may further send a response to the get command to feed back the one or more first elements.

In a possible implementation, the get command carries an identifier of the one or more first elements, and the identifier of the one or more first elements identifies the one or more first elements. When reading the one or more first elements from the array based on the get command, the storage node reads the one or more first elements from the array based on the identifier of the one or more first elements.

In a possible implementation, the one or more first elements are a to-be-trained model parameter needed to complete one iteration of model training by the computing node. The computing node may obtain the one or more first elements from the array based on the response to the get command, to complete the one iteration of the model training.

In a possible implementation, the get command carries an identifier of the array, and the identifier of the array identifies the array.

In a possible implementation, the computing node may further send a post (post) command to the storage node based on the NVMe, where the post command is used to request to store one or more second elements in the array. The storage node updates the one or more second elements to the array based on the post command after receiving the post command.

In a possible implementation, the one or more second elements are a trained model parameter generated through the one iteration of the model training by the computing node by using the one or more first elements. When updating the one or more second elements to the array, the storage node updates the one or more first elements in the array by using the one or more second elements.

In a possible implementation, the post command carries an identifier of the one or more second elements.

In a possible implementation, an identifier of the one or more second elements that is carried in the post command is the same as the identifier of the one or more first elements that is carried in the get command.

In a possible implementation, the post command carries a version of the one or more second elements, and the version is used to indicate the one iteration for generating the one or more second elements.

In a possible implementation, the storage node may further perform one round of aggregation, aggregate a plurality of groups of elements in the round of aggregation, and update an original obtained through the aggregation to the array, where each group of elements includes the one or more second elements.

According to a third aspect, this application further provides a computing node. The computing node has functions of implementing behaviors of the computing node in the method example in the first aspect. For beneficial effects, refer to the descriptions of the first aspect. Details are not described herein again. The functions may be implemented by using hardware, or may be implemented by hardware executing corresponding software. The hardware or the software includes one or more units corresponding to the foregoing functions. In a possible design, a structure of the computing node includes a first sending module and a first receiving module, and optionally further includes a first processing module. These modules may perform corresponding functions of the computing node in the method example in the first aspect. For details, refer to the detailed descriptions in the method example. Details are not described herein again.

According to a fourth aspect, this application further provides a storage node. The storage node has functions of implementing behaviors of the storage node in the method example in the first aspect. For beneficial effects, refer to the descriptions of the first aspect. Details are not described herein again. The functions may be implemented by using hardware, or may be implemented by hardware executing corresponding software. The hardware or the software includes one or more units corresponding to the foregoing functions. In a possible design, a structure of the storage node includes a second receiving module, a second processing module, and a second sending module. These modules may perform corresponding functions of the storage node in the method example in the first aspect. For details, refer to the detailed descriptions in the method example. Details are not described herein again.

According to a fifth aspect, this application further provides a storage node. The storage node includes an NVMe controller and a storage medium. The storage medium is configured to store data in a form of an array. The NVMe controller performs the method performed by the storage node in the first aspect and the possible implementations of the first aspect. For details, refer to the detailed descriptions in the method example. Details are not described herein again.

According to a sixth aspect, this application further provides a computing node. The computing node includes a processor and a memory that are connected to each other. The processor is configured to read and execute computer program code stored in the memory, to perform the method performed by the computing node in the first aspect and the possible implementations of the first aspect. For details, refer to the detailed descriptions in the method example. Details are not described herein again.

According to a seventh aspect, this application further provides a computer-readable storage medium. The computer-readable storage medium stores instructions. When the instructions are run on a computer, the computer is enabled to perform the method in the first aspect and the possible implementations of the first aspect.

According to an eighth aspect, this application further provides a computer program product including instructions. When the computer program product runs on a computer, the computer is enabled to perform the method in the first aspect and the possible implementations of the first aspect.

According to a ninth aspect, this application further provides a computer chip. The chip is connected to a memory. The chip is configured to read and execute a software program stored in the memory, to perform the method in the first aspect and the possible implementations of the first aspect.

### BRIEF DESCRIPTION OF DRAWINGS

FIG. 1A is a diagram of NVMe-based interaction steps according to this application;
FIG. 1B is a diagram of an NVMe-based queue pair mechanism according to this application;
FIG. 2 is a diagram of a structure of a data access system according to this application;
FIG. 3 is diagrams of logical structures of a one-dimensional array, a two-dimensional array, and a three-dimensional array according to this application;
FIG. 4 is a diagram of a structure of a model training system according to this application;
FIG. 5A to FIG. 5C are diagrams of structures of model training systems according to this application;
FIG. 6 is a diagram of a data access method according to this application;
FIG. 7A to FIG. 7C are diagrams of storage manners of elements and identifiers of the elements according to this application;
FIG. 8 is a diagram of a fully synchronous aggregation mode according to this application;
FIG. 9A and FIG. 9B are diagrams of manners in which a server completes a round of aggregation according to this application;
FIG. 10A and FIG. 10B are a diagram of a partially synchronous aggregation mode according to this application;
FIG. 11 is a diagram of a fully asynchronous aggregation mode according to this application;
FIG. 12 is a diagram of a structure of a computing node according to this application; and
FIG. 13 is a diagram of a structure of a storage node according to this application.

### DESCRIPTION OF EMBODIMENTS

Before a data access method, device, and system that are provided in embodiments of this application are described, a non-volatile memory host controller interface (non-volatile memory express, NVMe) specification in embodiments of this application is first described.

The NVMe specification is a logical-device interface specification, and is a bus transmission protocol specification based on a device logical interface. The NVMe specification is designed for a solid state disk (solid state disk, SSD), and is used to implement efficient data communication between a data access device and an SDD through a high-speed interface.

Herein, that a hard disk of the data access device is a solid state disk supporting the NVMe protocol is used as an example to describe an interaction manner between the data access device and the hard disk. The solid state disk supporting the NVMe protocol may be referred to as an NVMe SSD for short. A controller of the SSD is also referred to as an NVMe controller.

In the NVMe protocol, an interaction between the data access device and the SSD is implemented based on a series of submission queues (submission queues, SQs) and completion queues (completion queues, CQs), where each submission queue has a paired completion queue. These queues are created by a driver running on the data access device (the driver may be referred to as an NVMe driver), and these queues are shared between the driver and the NVMe SSD. The queues may be located in a shared memory of the data access device, or may be located in a memory of the NVMe SSD. The submission queues are used to place commands sent by the data access device to the SSD. Each command that needs to be placed in the submission queues needs to have a submission queue element (submission queue element, SQE) format. The completion queues are used to place responses to the commands fed back by the SSD to the data access device. Each response that needs to be placed in the completion queues needs to have a completion queue element (completion queue element, CQE) format.

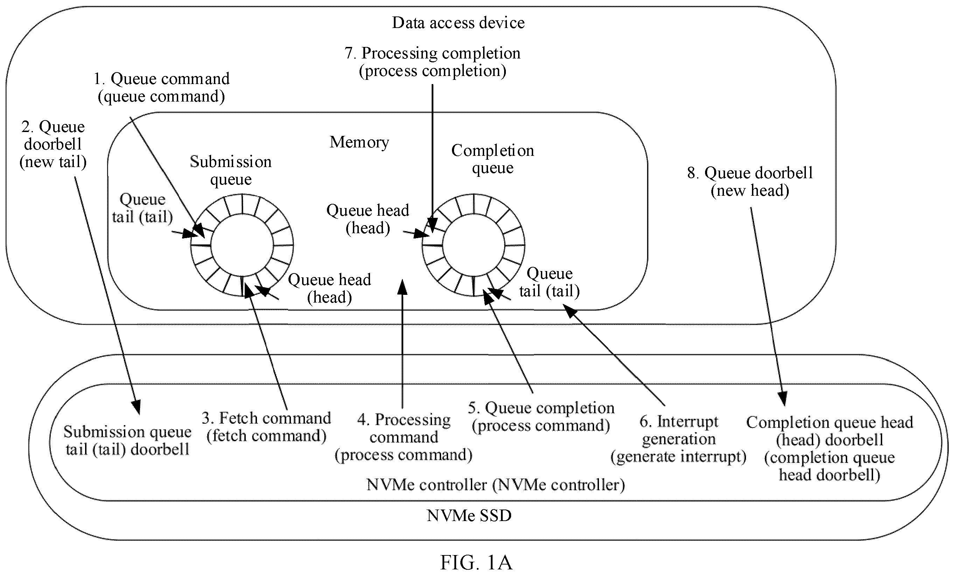

After the driver configures the submission queues and the completion queues, the driver and the NVMe SSD may interact with each other. As shown in FIG. 1A, interaction steps are as follows:
Step 1: The driver places a new command in a submission queue. The command may be a post (post) command used to request to write data, or may be a get (get) command used to request to read data.
Step 2: The driver writes, into a doorbell register, a tail pointer that points to a queue tail of the submission queue, to notify the NVMe controller in the NVMe SSD that the new command is to be executed.
Step 3: The NVMe controller obtains the command from the submission queue. The NVMe controller usually extracts the command from the submission queue starting from a queue head of the submission queue.
Step 4: The NVMe controller processes the command. For example, the NVMe controller writes data into a flash memory of the SSD based on the command, or reads data from the flash memory of the SSD based on the command.
Step 5: After completing the command, the NVMe controller places a response to the command in an associated completion queue. If the command is used to request to write data, the response placed in the completion queue indicates a data write success or failure. If the command is used to request to read data, the response placed in the completion queue indicates that a data read success or failure. If the data is successfully read, the NVMe controller also sends the read data to the driver.
Step 6: The NVMe controller notifies, by using an interrupt mechanism, that the driver has completed the command.
Step 7: The driver extracts the response from the completion queue.
Step 8: The driver writes an updated head pointer that points to the completion queue into the doorbell register, and sends the updated head pointer to the NVMe controller.

The submission queue and the completion queue that are mentioned in the foregoing steps exist in pairs, that is, the submission queue and the completion queue are associated in a one-to-one manner. The submission queue and the completion queue are used to read and write data. There is a group of administration queues in addition to the submission queue and the completion queue. The group of administration queues is used to transfer control commands, to complete some administration operations, such as queue creation, queue deletion, and a firmware update.

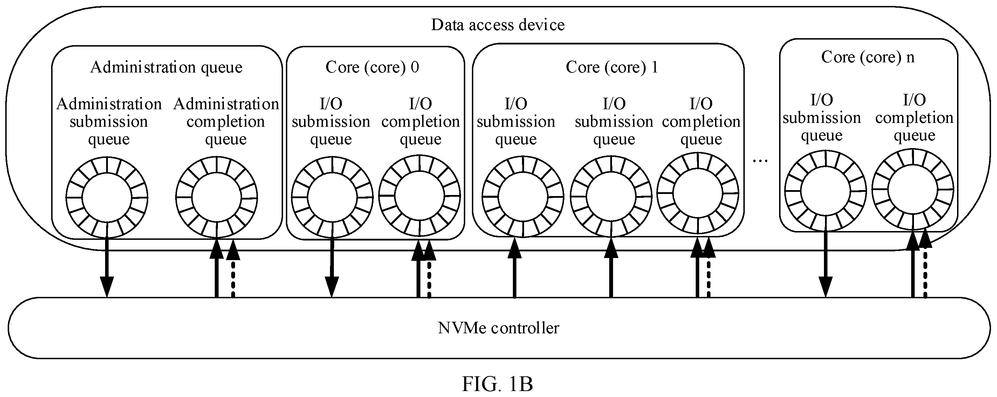

The NVMe protocol allows a maximum of 65535 individual queues, and each queue can have a maximum of 65535 entries. In actual application, a quantity of queues may be determined based on a system configuration and expected load of the data access device. In other words, there may be a plurality of queue pairs in the data access device, and one queue pair includes one submission queue and one completion queue. The driver may set different priorities for different queue pairs. In this way, the NVMe controller can extract commands from submission queues based on priorities of the submission queues, and process the commands. FIG. 1B is a diagram of a queue pair mechanism. As shown in FIG. 1B, a plurality of queue pairs may be created in a data access device, and there is a one-to-one correspondence between a submission queue and a completion queue in each queue pair.

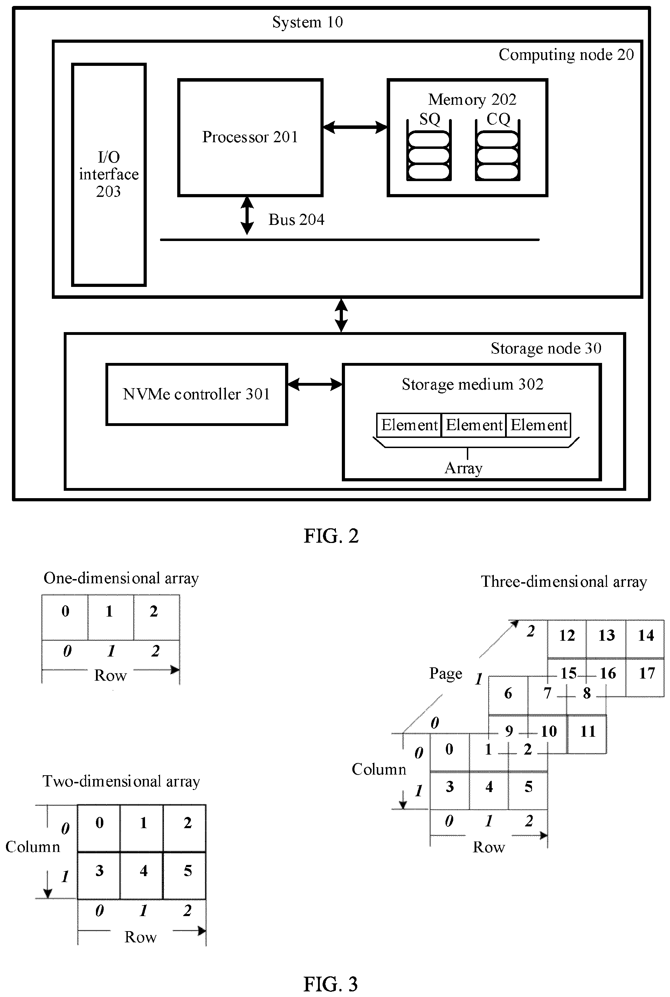

FIG. 2 is a diagram of a structure of a data access system according to an embodiment of this application. The data access system includes a computing node 20 and a storage node 30.

In the system, the computing node 20 accesses the storage node 30 based on an NVMe protocol, for example, accesses an array in the storage node 30 or an element in the array. To be specific, the computing node 20 can add a command used to access the storage node 30 to a submission queue; and the storage node 30 can extract the command from the submission queue, process the command to perform data reading/writing, and add, to a completion queue, a response that carries a processing result of the command. The computing node 20 obtains the processing result of the command from the completion queue. The computing node 20 is a host (host) mentioned in the NVMe standard or the data access device mentioned in the foregoing content. The storage node 30 is an NVMe disk mentioned in the NVMe standard or the NVMe SSD mentioned in the foregoing content. The NVMe disk or the NVMe SSD may be located inside the computing node 20, or may be located outside the computing node 20 (for example, connected to the computing node 20 through a network).

Communication between the computing node 20 and the storage node 30 complies with a fiber channel (fibre channel, FC) protocol, remote direct memory access (remote direct memory access, RDMA), a remote NVMe controller protocol (remote array controller protocol, RACP), a high-speed serial computer expansion bus standard (peripheral component interconnect express, PCIe) protocol, or the like.

The following separately describes functions and structures of the storage node 30 and the computing node 20.

The storage node 30 is configured to store data. Data in the storage node 30 is organized in a form of an array. The array includes a plurality of elements of a same data type. The array mentioned in this embodiment of this application may be a one-dimensional array, or may be a multi-dimensional array. The multi-dimensional array may be two-dimensional data, a three-dimensional array, a four-dimensional array, or the like.

FIG. 3 shows an example of logical structures of a one-dimensional array, a two-dimensional array, and a three-dimensional array. A logical structure of an array can describe relative locations of elements in the array. It can be learned from FIG. 3 that the logical structure of the one-dimensional array is a linear table, and elements in the one-dimensional array are adjacent in the logical structure. The logical structure of the two-dimensional array is a two-dimensional matrix. In the two-dimensional matrix, it indicates that an element needs to be represented in two dimensions: a row (row) and a column (column). The logical structure of the three-dimensional array is a three-dimensional matrix. In the three-dimensional matrix, it indicates that an element needs to be represented in three dimensions: a row (row),a column (column), and a page (page).

Any element in an array includes one or more pieces of data. In other words, each element may be considered as a one-dimensional array including one or more pieces of data.

A specific form of the storage node 30 is not limited in embodiments of this application. Any device that can store data is applicable to embodiments of this application. For example, the storage node 30 may be a server, a notebook computer, a portable computer, a mobile terminal, an accelerator card, or the like.

A quantity of storage nodes 30 is not limited in embodiments of this application. For example, the system includes one storage node 30, and data that needs to be accessed by the computing node 20 is all stored in the storage node 30. For another example, the system includes a plurality of storage nodes 30, the plurality of storage nodes 30 can constitute a distributed storage system, and data that needs to be accessed by the computing node 20 is distributed in the storage nodes 30.

The storage node 30 includes an NVMe controller 301 and a storage medium 302 that has a data storage function. Data stored in the storage medium 302 is organized in a form of an array. A type of the storage medium 302 that is configured to store data and that is in the storage node 30 is not limited in this application. For example, the storage medium 302 may be a random access memory, or may be a read-only memory (read-only memory, ROM). The random access memory may be a dynamic random access memory (dynamic random access memory, DRAM) or a storage class memory (storage class memory, SCM). The storage medium 302 may alternatively include another random access memory, for example, a static random access memory (static random access memory, SRAM). The storage medium 302 may be alternatively a dual in-line memory module (dual in-line memory module, DIMM) or a solid state disk (solid state disk, SSD).

The NVMe controller 301 has a function of the NVMe controller 301 mentioned in the foregoing descriptions about the NVMe. The NVMe controller 301 interacts with the computing node 20, processes a command from the computing node 20, and feeds back a response to the command to the computing node 20. The NVMe controller 301 extracts a command from an extraction queue, processes the command, and performs data reading/writing on the storage medium 302 (for example, writes a new array into the storage medium 302, writes a new element into the array, or updates the array or an element in the array). The NVMe controller 301 may also have a data computing function. For example, the NVMe controller 301 can aggregate data of different computing nodes 20 that needs to be written into the storage node 30, for example, aggregate one or more pieces of data into an element in an array or aggregate one or more pieces of data into an array. For another example, the NVMe controller 301 can further compute data of the computing node 20 that needs to be written into the storage node 30. For example, the NVMe controller 301 may further adjust, according to a preset algorithm, pieces of data of the computing node 20 that need to be written, integrate pieces of adjusted data into one element, and update the element to an array.

The NVMe controller 301 may be a central processing unit (central processing unit, CPU) or another application-specific integrated circuit. Alternatively, the NVMe controller 301 may be another general-purpose processor, a data processing unit (data processing unit, DPU), a graphics processing unit (graphics processing unit, GPU), an embedded neural-network processing unit (neural-network processing unit, NPU), a digital signal processor (digital signal processor, DSP), an application-specific integrated circuit (application-specific integrated circuit, ASIC), a field programmable gate array (field programmable gate array, FPGA), another programmable logic device, a discrete gate, a transistor logic device, a discrete hardware component, or the like.

The computing node 20 indicates a device that needs to access the storage node 30 in the system. In different scenarios, the computing node 20 accesses the storage node 30 for different purposes. For example, in a cloud scenario, the storage node 30 is deployed in a cloud, and a user rents a resource in the storage node 30 to store data of the user. The computing node 20 is deployed on a user side, and the computing node 20 may access the data of the user in the storage node 30 when being triggered by the user. For another example, in a process of training a model (the model may be a machine learning model or a neural network model), the model needs to be trained to find a most suitable model parameter. The storage node 30 may store a to-be-trained model parameter. The computing node 20 is configured to train the model. The computing node 20 may access the storage node 30 to obtain the to-be-trained parameter, configure the to-be-trained parameter in the model for training, and then write a parameter generated through the training into the storage node 30 by accessing the storage node 30. Iterations are performed cyclically in this way until model training is completed.

The computing node 20 includes an input/output (input/output, I/O) interface 203, a processor 201, and a memory 202. The I/O interface 203, the processor 201, and the memory 202 may be connected to each other through a bus 204.

The I/O interface 203 is configured to communicate with a device (for example, the storage node 30) located outside the computing node 20. For example, a response sent by the storage node 30 is received through the I/O interface 203, or a command is sent to the storage node 30 through the I/O interface 203.

The processor 201 is a computing core and a control core of the computing node 20, and may be a central processing unit (central processing unit, CPU) or another application-specific integrated circuit. Alternatively, the processor 201 may be another general-purpose processor, a DSP, an ASIC, an FPGA, another programmable logic device, a discrete gate, a transistor logic device, a discrete hardware component, or the like.

The memory 202 is usually configured to store computer program instructions. A specific form of the memory 202 is similar to a specific form of the storage medium 302. For details, refer to the foregoing descriptions. Details are not described herein again. The memory 202 may also be referred to as a memory of the computing node 20.

The processor 201 is coupled to the memory 202, and invokes the computer program instructions stored in the memory 202, to perform some operations. For example, the processor 201 accesses the storage node 30 in response to a user operation, or trains the model by using the to-be-trained model parameter obtained from the storage node 30.

In this embodiment of this application, the storage node 30 stores data in a form of an array, and the computing node 20 can access, based on the NVMe protocol, the array stored in the storage node 30 or an element in the array. A data structure of an array is simple, and an array, especially a multi-dimensional array, can include a large amount of data. The computing node 20 can read or write a plurality of pieces of data in batches by accessing the array stored in the storage node 30, so that data access efficiency can be effectively improved.

The following uses a data access method in a model training scenario in the field of artificial intelligence as an example to describe the data access method mentioned in embodiments of this application.

Generally, a process of training a model (for example, a machine learning model or a neural network model) is an iteration process. In each iteration, a to-be-trained model parameter is obtained, and the to-be-trained model parameter is configured in the model. Each sample in training samples is input into the model. The model parameter configured in the model is adjusted based on an output result of the model, to obtain a trained model parameter in an iteration. For example, the model parameter configured in the model may be adjusted based on the output result of the model by using a stochastic gradient descent (stochastic gradient descent, SGD) method. In the SGD, a gradient of the model in the iteration may be computed based on the output result of the model. The gradient describes a manner of adjusting a model parameter of the model (for example, increasing or decreasing a parameter). The model parameter configured in the model is adjusted based on the gradient, to obtain the trained model parameter in the iteration. A plurality of iterations are performed in this way until a loss function of the model converges (for example, a result of the loss function is close to a specific value). The loss function describes a difference or discrepancy between the output result of the model and an ideal result.

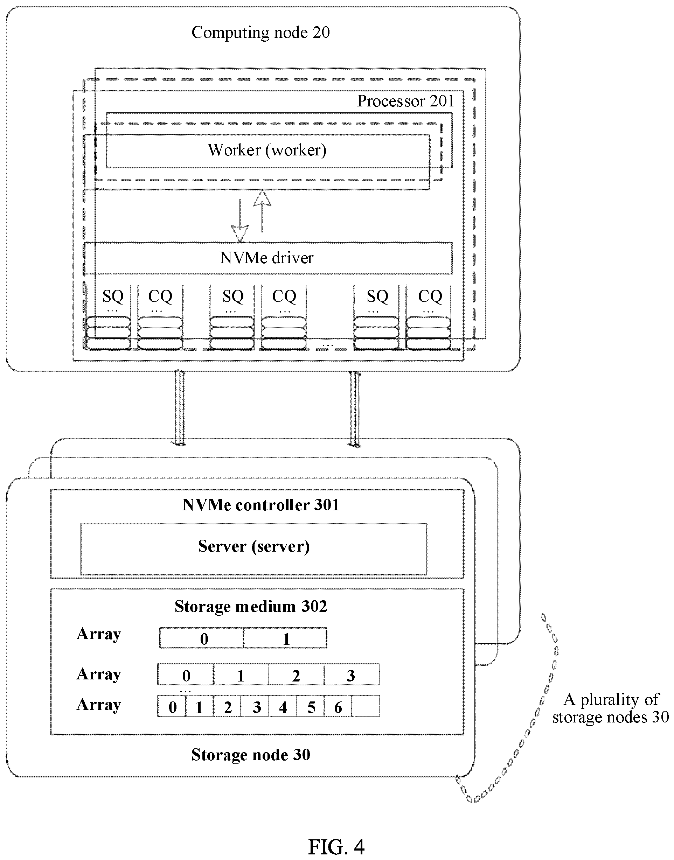

Because there are a huge quantity of model parameters of a model, a large quantity of model parameters need to be trained in model training. Therefore, a large quantity of to-be-trained model parameters may be stored in a node having a large storage space, and a node having a strong data computing capability completes each iteration. In this way, the node having a computing capability (for example, the computing node 20) only needs to obtain a to-be-trained model parameter from the node storing model parameters, to complete each iteration. After each iteration is completed, the node having a computing capability may feed back a trained model parameter to the node storing model parameters, so that the node stores the model parameter obtained through the iteration, and the node having a computing capability subsequently extracts the model parameter to perform a next iteration. Alternatively, after each iteration is completed, the node having a computing capability may feed back a gradient obtained through training to the node storing model parameters, so that the node adjusts and updates a stored model parameter based on the gradient and stores an updated model parameter, and the node having a computing capability subsequently extracts the model parameter to perform a next iteration. In this way, a model training system provided in embodiments of this application is formed. With reference to FIG. 4, the following describes the model training system provided in embodiments of this application.

As shown in FIG. 4, in terms of a hardware structure, the model training system is a cluster including a plurality of nodes. A node may be a computing node that has a data processing capability or a data storage capability, for example, a server. A specific form of the node is not limited in embodiments of this application.

For any node, only a server (server) may be deployed on the node, only a worker (worker) may be deployed on the node, or both a server and a worker are deployed on the node. A quantity of servers or workers deployed on each node may be determined depending on an actual requirement. A server and a worker can be understood as software deployed on a node. For example, the server and the worker may be processes or threads running on the node.

A node on which a worker is deployed is a computing node 20. A structure of the computing node 20 is similar to that of the computing node 20 mentioned in the foregoing descriptions. For details, refer to the foregoing descriptions. The structure of this type of node is not described herein again. The computing node 20 may access data stored in a storage node 30, and the computing node 20 can also be understood as a data access device.

A node on which a server is deployed is the storage node 30. A structure of the storage node 30 is similar to that of the storage node 30 mentioned in the foregoing descriptions. For details, refer to the foregoing descriptions. The structure of this type of node is not described herein again. A to-be-trained model parameter and a trained model parameter in the storage node 30 on which the server is deployed are stored in a form of an array. Any model parameter may be an element in an array, or may be data included in an element of data.

For a node on which both a server and a worker are deployed, this type of node has both the structure of the computing node 20 and the structure of the storage node 30. In other words, the node includes components of the computing node 20 and components of the storage node 30. For example, the storage node 30 may be connected to the computing node 20 through a system bus, and the storage node 30 may be used as a part of the computing node 20. In this way, both a server and a worker are deployed on the computing node 20. The system bus may be a peripheral component interconnect express (peripheral component interconnect express, PCIe) bus, or may be another type of bus.

The computing node 20 may access, based on NVMe, a model parameter stored in the storage node 30, for example, obtain a to-be-trained model parameter or write a trained model parameter.

The worker is configured to train a model to complete a plurality of iterations. The node on which the worker is located usually needs to have a strong data processing capability.

The server is configured to store model parameters needed to perform model training by the worker, and therefore the node on which the server is located needs to have a strong data storage capability.

The server is configured to store a to-be-trained model parameter of the model and a trained model parameter. The worker may obtain the to-be-trained model parameter from the server, and train the model based on the to-be-trained parameter, to complete a plurality of iterations until the model training is completed.

In this embodiment of this application, the to-be-trained model parameter and the trained model parameter are two different groups of model parameters named for a specific iteration. For any iteration, a group of model parameters that is present before training and a model parameter that is needed for the iteration are to-be-trained model parameters. A group of model parameters obtained through the iteration is referred to as a trained model or a trained model parameter in the iteration. Actually, a trained model parameter in a previous iteration may be a to-be-trained model parameter in a next iteration.

In each iteration, the worker may adjust a to-be-trained model parameter by using a gradient obtained through training, to obtain a trained model parameter, and store the trained model parameter in the server. Alternatively, the worker may transmit a gradient obtained through training to the server, and the server adjusts a to-be-trained model parameter by using the gradient, to generate and store a trained model parameter.

It can be learned that model training may be completed cooperatively by the worker and the server. The server mainly undertakes a task of storing model parameters. The worker mainly undertakes a training task in a model training process (that is, completes computing in a plurality of iterations). A plurality of workers are allowed to be deployed in the system. In this way, the training task in the model training process may be completed jointly by the plurality of workers. In each iteration, each worker is responsible for training some to-be-trained model parameters.

In this embodiment of this application, in each iteration, the to-be-trained model parameters that each worker is responsible for training may be each element in an array, some elements in an array, or data in an element of data. Correspondingly, model parameters obtained through training by each worker may be each element in an array, some elements in an array, or data in an element of data. In each iteration, the workers train a model based on to-be-trained model parameters, obtain trained model parameters, and feed back the trained model parameters to the server. In the server, the server may overwrite the to-be-trained model parameters by using the trained model parameters, that is, the to-be-trained model parameters in the server are updated to the trained model parameters.

A deployment manner of nodes in the model training system is not limited in embodiments of this application. The following describes three deployment manners of the model training system.

### Manner 1: Centralized deployment

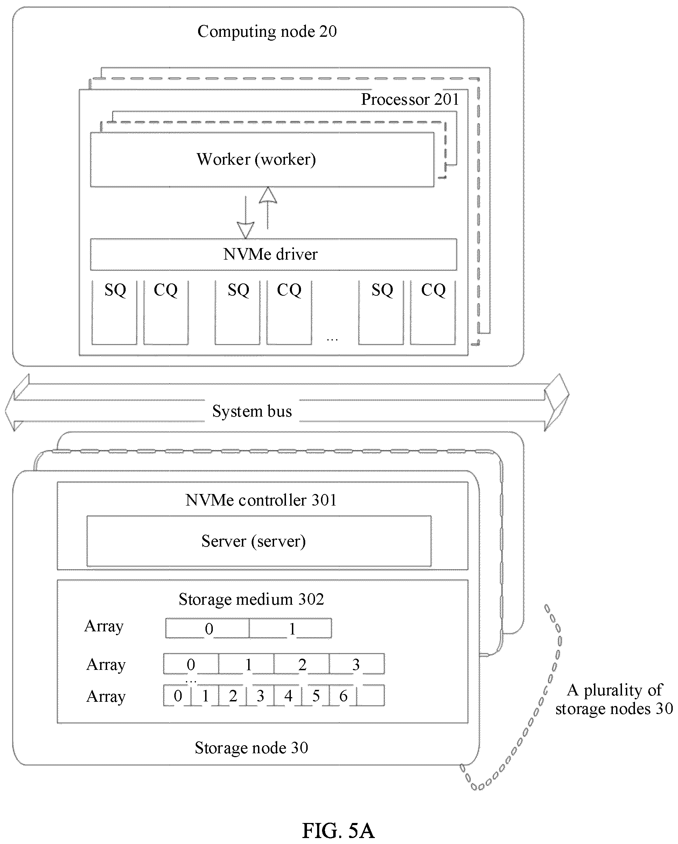

FIG. 5A shows a model training system according to an embodiment of this application. The model training system includes a computing node 20 and at least one storage node 30. The plurality of storage nodes 30 are connected to the computing node 20 through a system bus. At least one worker is deployed on the computing node 20, and the worker may run on a processor 201 of the computing node 20. A server is deployed on the storage node 30, and the server may run on an NVMe controller 301 of the storage node 30.

Each worker (from a perspective of hardware, a hardware execution body is the processor 201 or a core in the processor 201) may access the storage node 30 through NVMe. In other words, each worker adds a command to a submission queue by using an NVMe driver on the computing node 20. The server (from a perspective of hardware, a hardware execution body is the NVMe controller 301) extracts a command from a submission queue, processes the command, and adds a response to the command to a completion queue. The worker obtains the response to the command from the completion queue by using the NVMe driver on the computing node 20.

In this structure, an interaction between the worker and the server is performed based on the system bus. The system bus may be a PCIe bus, or may be a bus of a compute express link (compute express link, CXL), a universal serial bus (universal serial bus, USB) protocol, or another protocol.

### Manner 2: Distributed deployment

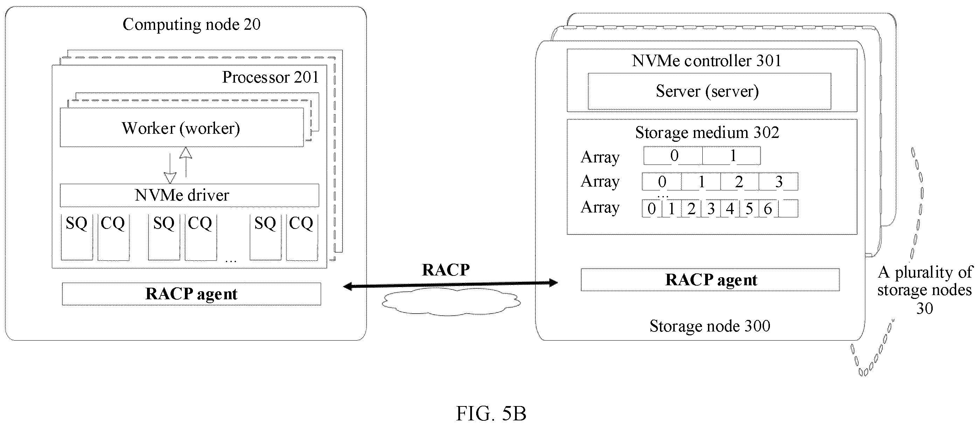

FIG. 5B shows a model training system according to an embodiment of this application. The model training system includes a computing node 20 and at least one storage node 30. The plurality of storage nodes 30 are connected to the computing node 20 through a network. At least one worker is deployed on the computing node 20, and the worker may run on a processor 201 of the computing node 20. A server is deployed on the storage node 30, and the server may run on an NVMe controller 301 of the storage node 30.

An interaction manner between the worker and the server is similar to the interaction manner between the worker and the server in the model training system shown in FIG. 5A. A difference lies in that an interaction between the worker and the server in FIG. 5B is performed based on a network, that is, a command and a response that are exchanged between the worker and the server are transmitted through the network. The worker and the server may interact with each other based on RDMA. For example, when a submission queue and a completion queue are located in a memory on a computing device side, the server may obtain a command in the submission queue from the submission queue through RDMA, and write a response to the command into a completion queue in an RDMA manner. For another example, the worker and the server interact with each other based on a RACP. A RACP agent (RACP agent) is deployed on each computing node 20 and the storage node 30. The worker adds a command to a submission queue by using an NVMe driver, and the NVMe driver notifies, by using the RACP agent on the worker, the server that a new command is to be processed. On the server side, the NVMe controller 301 obtains the command in the submission queue by using the RACP agent on the server, processes the command, and generates a response to the command. The NVMe controller 301 adds the command of the command to a completion queue on the worker side by using the RACP agent on the server. The RACP agent may be a hardware module or a software module. For example, the RACP agent on the computing node 20 may be software running on the processor 201, and the RACP agent on the storage node 30 may be software running on the NVMe controller 301.

### Manner 3: Hybrid deployment

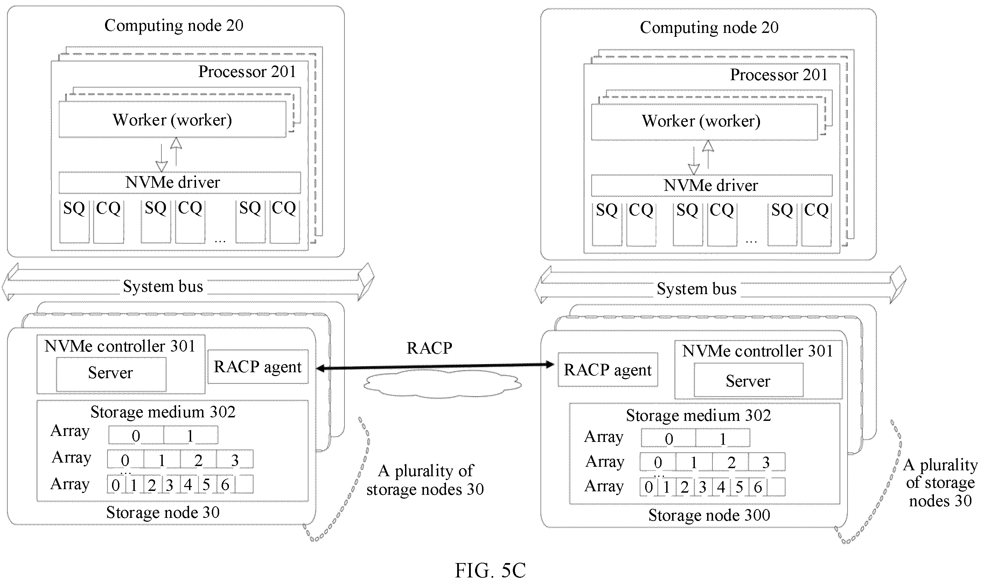

FIG. 5C shows a model training system according to an embodiment of this application. The model training system includes a plurality of computing nodes 20 and a plurality of storage nodes 30. At least one worker is deployed on the computing node 20, and the worker may run on a processor 201 of the computing node 20. A server is deployed on the storage node 30, and the server may run on an NVMe controller 301 of the storage node 30.

In the model training system, each computing node 20 may be connected to one or more storage nodes 30 through a system bus. The computing node 20 and the storage node 30 that are connected through the system bus may be considered as a hybrid node, and both a worker and a server are deployed on the hybrid node. In this way, the model training system includes a plurality of hybrid nodes, and the plurality of hybrid nodes are connected to each other through a network.

An interaction manner between the worker and the server is similar to the interaction manner between the worker and the server in the model training system shown in FIG. 5A. It should be noted that in the model training system shown in FIG. 5C, for one hybrid node, an interaction between a worker and a server is performed based on the system bus. The model training system shown in FIG. 5C allows a cross-node interaction between a worker and a server, that is, a worker on a hybrid node may interact with a server on another hybrid node based on a network.

For example, a worker on a hybrid node may interact with a server on another hybrid node based on a RACP. A RACP agent (RACP agent) may be deployed on each hybrid node, and the RACP agent is located on a storage node 30 in the hybrid node. A RACP agent on a hybrid node can obtain a command in a submission queue in another hybrid node, and transmit the command to an NVMe controller 301 in a node on which the RACP agent is located, so that the NVMe controller 301 processes the command and generates a response to the command. The RACP on the hybrid node can add the command of the command to a completion queue in the another hybrid node. The RACP agent may be a hardware module or a software module, for example, software running on the NVMe controller 301.

The following describes, based on the model training systems shown in FIG. 4 and FIG. 5A to FIG. 5C, a data access method provided in embodiments of this application.

Before workers train a model cooperatively, the computing node 20 needs to first request the storage node 30 to create an array, and obtains an array identifier of the created array from the storage node 30, to subsequently store, in the array, model parameters needed to train the model, and obtain, from the storage node 30, a model parameter needed for each iteration.

This embodiment of this application provides a create (create) command. The create command is used to request to allocate and initialize an array.

For example, when the computing node 20 needs to store data (for example, initially, parameters needed for model training need to be stored), the computing node 20 may send a create command to the storage node 30. The create command carries an attribute of an array, and the attribute of the array includes some or all of the following: a quantity of elements in the array, a size of each element, a quantity of dimensions of the array, a size of each dimension, and a serialization manner of an element identifier in the array.

Certainly, in some scenarios, an attribute of an array may include all the information listed above, or may include some information. The information that is not carried in the attribute of the array in the create command may be set to a default value. For example, the quantity of dimensions of the array and the size of each dimension on a side of the storage node 30 are invariable, and the array on the side of the storage node 30 is an array of M rows, N columns, and W pages. In this case, the attribute of the array in the create command needs to indicate only the quantity of elements in the array and the size of each element. For another example, the attribute of the array in the create command indicates the size of each element and the quantity of dimensions of the array, but does not indicate the size of each dimension and the serialization manner of the element identifier in the array. The storage node 30 may create the array based on a default dimension size, and the serialization manner of the element identifier in the array may also be a default serialization manner.

After receiving the create command, the storage node 30 may create the array based on the attribute of the array in the create command, and allocate an array identifier (Array ID) to the array. The array identifier can uniquely identify the array.

For fields in the create command, refer to Table 1. The fields in the create command listed in Table 1 are merely examples. The fields in the create command and definitions of the fields are not limited in embodiments of this application.

**Table 1**

| Offset (offset) | Length (length) | Field name (field) | Description (description) | |
|---|---|---|---|---|
| 0 | 4 | System (system) | This field is reserved for transferring an address of an address space (Process Address Space Identifier, PASID) in CPU instructions. | |
| 4 | 2 | Command identifier (command identifier, CID) | This field is a command identifier that identifies a pairing request/response. The CID is unique in each SQ. | |
| 6 | 1 | Operation code (opcode) | The operation code indicates a type of a command. Different types are corresponding to different values of the operation code. For example, a value 00 indicates that the command is an array creation command. | |
| 7 | 1 | Option (options) | Reserved bits | |
| 8 | 2 | Element size (itemsize) | The field defines a size of each element in an array, and the size of the element is measured in bytes (bytes). | |

| Offset (offset) | Length (length) | Field name (field) | Description (description) | |
|---|---|---|---|---|
| 10 | 1 | Quantity of dimensions of an array (numdimensions) | The field defines a quantity of dimensions of an array. For example, 1 may indicate a one-dimensional array, 2 indicates a two-dimensional array, and 3 indicates a three-dimensional array. | |
| 11 | 8, ..., and 32 | Dimension size (dimensions) | The field defines a size of each dimension, and a default dimension size may be 8 bytes or another size. | |
| 43 | 5 | Reserved bits (reserved) | Not used | |
| 48 | 1 | Initial value (initvalue) | The field indicates initial values of elements in an array. For example, 0 indicates that initial values of elements in the array are invariable, 1 indicates that initial values of elements in the array are normally distributed randomly, and 2 indicates that initial values of elements in the array are uniformly distributed randomly. | |
| 49 | 4 | Minimum value (valuemin) | A minimum value and content of the minimum value field are related to the initial value field. | |
| | | | Invariable value (for example, a corresponding initial value is 0) | Random normal distribution or random uniform distribution |
| 53 | 4 | Maximum value (valuemax) | valuemin: A value of each element is invariable, and an invariable value is defined for each element. | valuemin defines a lower limit of a value range for each element. |
| | | | | valuemax defines an upper limit of a value range for each element. |
| | | | valuemax: This value may be default. | |
| 57 | | Reserved bits (reserved) | This field may be used to specify a type of an array, for example, a one-dimensional array, a two-dimensional array, or a three-dimensional array. For example, 0 indicates a linear array or a one-dimensional array, 1 indicates a two-dimensional array, and 2 indicates a three-dimensional array. This field is convenient for subsequent indexing of element identifiers. | |
| One create command has a total of 64 bytes. | | | | |

After the storage node 30 creates the array and initializes the array, the computing node 20 may interact with the storage node 30 based on the NVMe, to obtain the array identifier of the array or the element identifier in the array from the storage node 30. For example, the computing node 20 may send a get command to obtain the array identifier or the element identifier in the array. After receiving the get command, the storage node 30 sends a response to the get command to the computing node 20, and transmits the array identifier or the element identifier in the array to the storage node 30. In a model training scenario, the array may be an array in which a to-be-trained parameter needed by the worker in one iteration is located, and one or more elements in the array may be the to-be-trained parameter needed by the worker in the one iteration. The following describes a model training process.

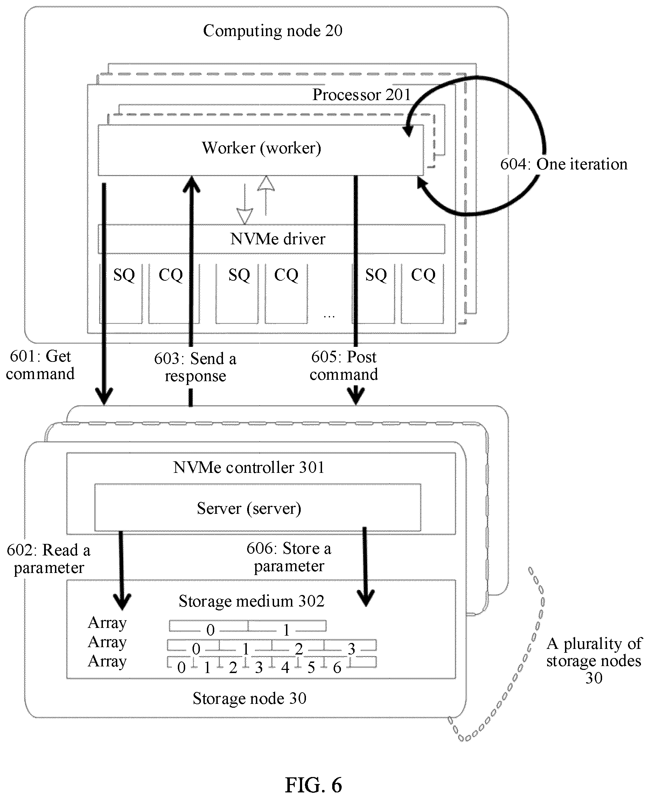

FIG. 6 shows a data access method according to an embodiment of this application. FIG. 6 shows an example of an interaction process between a worker and a server when the worker performs one iteration. The method includes the following steps.

Step 601: The worker sends a get command to the server, where the get command is used to request to obtain a to-be-trained model parameter. The get command carries an identifier (ID, identifier) of the to-be-trained model parameter, and the identifier of the to-be-trained model parameter indicates the to-be-trained model parameter. The get command may further carry an array identifier, and the array identifier identifies an array to which the to-be-trained model parameter belongs. A manner of setting the array identifier is not limited in embodiments of this application. Any data form that can uniquely indicate a value may be used as the array identifier.

On the server side, data is organized in a form of an array. An element in the array has a corresponding identifier, and the identifier of the element indicates the element in data. The to-be-trained model parameter may be each piece of data included in an element in the array, and the identifier of the to-be-trained model parameter is an identifier of the element. The to-be-trained model parameter may be a plurality of elements in the array, and the identifier of the to-be-trained model parameter is identifiers of the plurality of elements.

A manner of setting an identifier of an element is flexible. The following describes two manners of setting an identifier of an element.

A first type is an array-type identifier.

For an identifier of any element in an array, the identifier includes one or more indexes, and the one or more indexes form a small array. Each index describes a location of the element in one dimension.

A one-dimensional array may be considered as a special "multi-dimensional array", that is, has only one dimension. An identifier of an element includes one index, and the index describes a location of the element in a plurality of elements in the array. For example, the identifier of the element may be represented as [i], where i indicates the location of the element in the plurality of elements in the array.

For a two-dimensional array, an identifier of an element includes two indexes. One index describes a location of the element in the array in a row dimension, and the other index describes a location of the element in the array in a column dimension. For example, the identifier of the element may be represented as [i₁, i₀], where i₀ indicates the location of the element in the array in the row dimension, and i₁ indicates the location of the element in the array in the column dimension. For example, an identifier [3, 4] indicates an element in a 4^{th} row and a 3^{rd} column in the array.

For a three-dimensional array, an identifier of an element includes three indexes. One index describes a location of the element in the array in a row dimension, another index describes a location of the element in the array in a column dimension, and the other index describes a location of the element in the array in a page dimension. For example, the identifier of the element may be represented as [i₂, i₁, i₀], where i₀ indicates the location of the element in the array in the row dimension, i₁ indicates the location of the element in the array in the column dimension, and i₂ indicates the location of the element in the array in the page dimension. For example, an identifier [2, 3, 4] indicates an element in a 4^{th} row, a 3^{rd} column, and a 2^{nd} page in the array.

An array-type identifier indicates an element in a simple and intuitive manner, so that the server quickly locates an element in the array based on the array-type identifier.

A second type is a linear identifier.

For an identifier of any element in an array, the linear identifier is an identifier formed through serialization of one or more indexes of the element. Herein, serialization is a manner of processing the one or more indexes. A serialization manner of the one or more indexes is not limited in embodiments of this application. The linear identifier may mean using a separate "index value" to describe a location of the element in the array, and the index value is a result obtained through serialization of the one or more indexes of the element.

The serialization manner is not limited in embodiments of this application. For example, different weights are set for different dimensions, that is, each index is corresponding to a different weight. Summation of products of indexes and corresponding weights is performed, and a final sum value is a linear identifier of an element. For example, two indexes of an element in a two-dimensional array are [i₁, i₀], where the index i₀ is an index of the element in a row dimension, and the index i₁ is an index of the element in a column dimension. A preconfigured weight of the index in the row dimension is B, and a preconfigured weight of the index in the column dimension is A. A linear identifier of the element [i₁, i₀] is computed as follows: i₀*B+i₁*A.

For another example, a generation formula of a linear identifier is configured, and the linear identifier may be obtained by writing one or more indexes into a corresponding location in the generation formula. For example, three indexes of an element in a three-dimensional array are [i₂, i₁, i₀], where the index i₀ is an index of the element in a row dimension, the index i₁ is an index of the element in a column dimension, and the index i₂ is an index of the element in a page dimension. A generation formula of a linear identifier of the element [i₂, i₁, i₀] is (i₀*B+i₁*A)*C+i₂.

As mentioned above, when the to-be-trained model parameter is a plurality of elements in the array, the identifier of the to-be-trained model parameter is identifiers of the plurality of elements. The identifier of the to-be-trained model parameter may be a combination of identifiers of all of the plurality of elements. For example, if the to-be-trained model parameter is an element in a 1^{st} row and a 3^{rd} column and an element in a 3^{rd} row and a 1^{st} column in a two-dimensional array, the identifier of the to-be-trained model parameter includes an identifier [3, 1] and an identifier [1, 3].

If the plurality of elements are consecutively arranged or adjacent in a logical structure of the array, for example, the plurality of elements are all elements in a same row of the array, or the plurality of elements are all elements in a plurality of rows of the array; for example, the plurality of elements are all elements in a same column of the array, or the plurality of elements are all elements in a plurality of rows and columns of the array; or for another example, the plurality of elements are all elements in a same page of the array.

In this case, an embodiment of this application provides a group identifier. The group identifier may indicate the plurality of elements in a value. The identifier of the to-be-trained model parameter is the group identifier. The following describes the group identifier.

The group identifier includes one or more indexes, and a quantity of indexes is the same as a quantity of dimensions of the array. Each index describes locations of the plurality of elements in one dimension.

Each index has two values. One value can indicate a specific location in a dimension, for example, indicate a row, a column, or a page. The value is an exact value. The other value is a general value, and the general value indicates all elements in a dimension. The general value may be a preset specific flag. For example, the general value may be represented as ALL.

A two-dimensional array is used as an example. A group identifier is [IN1, IN0], a 1^{st} index IN1 is an index in a column dimension, and a 2^{nd} index IN0 is an index in a row dimension. A general value is represented as ALL. A group identifier [ALL, i₀] indicates elements in an i₀^{th} row and all columns, and a group identifier [i₁, ALL] indicates elements in all rows and an i₁^{th} column.

A three-dimensional array is used as an example. A group identifier is [IN2, IN1, IN0], a 1^{st} index IN2 is an index in a page dimension, a 2^{nd} index IN1 is an index in a column dimension, and a 3^{rd} index IN0 is an index in a column dimension. A general value is represented as ALL. A group identifier [ALL, i₁, i₀] indicates elements in an i₀^{th} row, an i₁^{th} column, and all pages, and a group identifier [i₂, i₁, ALL] indicates elements in all rows, the i₁^{th} column, and an i₂^{th} page.

It can be learned from the foregoing descriptions that the array-type identifier and the group identifier are similar in composition. To make the server more clearly determine whether the identifier of the to-be-trained model parameter carried in the get command is an array-type identifier or a group identifier, the get command may further carry an identifier mask, and the identifier mask (ID mask) indicates a type of the identifier of the to-be-trained model parameter (that is, an identifier of one or more elements). For example, the identifier mask may indicate a value type of each index (for example, indicate whether a value of the index is an exact value or a general value) in the identifier of the to-be-trained model parameter (that is, the identifier of the one or more elements).

The following describes a composition manner of an identifier mask in this embodiment of this application.

The identifier mask includes one or more index indicators, and a quantity of index indicators is the same as a quantity of indexes in an element identifier. Each index indicator is corresponding to one index, and an index indicator describes a value type of a corresponding index. For example, when the index indicator is equal to 0, it indicates that a value of an index corresponding to the index indicator is a general value, that is, the index indicates all elements in a dimension indicated by the index. When the index indicator is equal to 1, it indicates that a value of an index corresponding to the index indicator is an exact value, that is, the index indicates an element in a dimension indicated by the index.

A two-dimensional array is used as an example. An element identifier is [I1, I0], a 1^{st} index I1 is an index in a column dimension, and a 2^{nd} index I0 is an index in a row dimension. A general value is represented as ALL. In this case, a corresponding identifier mask is [INM1, INM0], a 1^{st} index indicator INM1 is corresponding to the index I1, and a 2^{nd} index indicator INM0 is corresponding to the index I0. An element identifier is [ALL, i₀], and a corresponding identifier mask is [0, 1]. A 1^{st} index indicator 0 indicates that a 1^{st} index ALL in the element identifier is a general value, which indicates all elements in the dimension; and a 2^{nd} index indicator 1 indicates that a 2^{nd} index i₀ in the element identifier is an exact value, which indicates an i₀^{th} row in the row dimension. Therefore, the element identifier [ALL, i₀] indicates elements in the i₀^{th} row and all columns. Likewise, for an element identifier [i₁, i₀], a corresponding identifier mask is [1, 1], and an element identifier [i₁, ALL] indicates an element in the i₀^{th} row and an i₁^{th} column.

A three-dimensional array is used as an example. An element identifier is [I2, I1, I0], a 1^{st} index I2 is an index in a page dimension, a 2^{nd} index I1 is an index in a column dimension, and a 3^{rd} index 10 is an index in a column dimension. A general value is represented as ALL. For an element identifier [ALL, i₁, i₀], a corresponding identifier mask is [0, 1, 1], and the element identifier [ALL, i₁, i₀] indicates elements in an i₀^{th} row, an i₁^{th} column, and all pages. For an element identifier [i₂, i₁, ALL], a corresponding identifier mask is [1, 1, 0], and the element identifier [i₂, i₁, ALL] indicates elements in all rows, the i₁^{th} column, and an i₂^{th} page.

It can be learned that the identifier mask can help the server more quickly parse the identifier of the model parameter carried in the get command, and clearly determine values of indexes in the identifier. Certainly, in actual application, another manner may be alternatively used to ensure that the server distinguishes between values of indexes in the identifier of the model parameter. For example, the worker and the server may pre-agree on a specific representation form of a general value. If the server identifies the pre-agreed specific representation form of the general value from an index in the identifier of the model parameter, the server can determine that a value of the index is the general value, which indicates all elements in a corresponding dimension.

It can be learned from the foregoing that, when the worker needs to obtain the to-be-trained model parameter from the server, the identifier of the to-be-trained model parameter may be carried in the get command. The worker adds the get command to a submission queue by using an NVMe driver on a computing node 20. The get command added to the submission queue satisfies a format of an SQE of the submission queue.

To enable the worker to access the server based on NVMe to obtain or update an element in the array, definitions of fields in the SQE are provided, as described in Table 2.

**Table 2**

| Offset (offset) | Length (length) | Field name (field) | | Description (description) | |
|---|---|---|---|---|---|
| 0 | 4 | System (system) | | This field is reserved for transferring an address of an address space (Process Address Space Identifier, PASID) in CPU instructions. | |
| 4 | 2 | Command identifier (command identifier, CID) | | This field is a command identifier that identifies a pairing request/response. The CID is unique in each SQ. | |
| 6 | 1 | Operation code (opcode) | | The operation code indicates a type of a command. Different types are corresponding to different values of the operation code. For example, value 0 indicates that the command is a get command, and a value 1 indicates that the command is a post command. | a |
| 7 | 1 | Option (options) | | Reserved bits | |
| 8 | 4 | Array identifier (array ID) | | A numeric identifier identifies an array that needs to be accessed. | |
| 12 | 4 | Version (version) | | This field indicates a version associated with a command, for example, a version of an array or version of an element in a value. In this embodiment of this application, the version may identify a quantity of iterations performed by the worker, and each | a |

| Offset (offset) | Length (length) | Field name (field) | Description (description) | | |
|---|---|---|---|---|---|
| | | | iteration is corresponding to one version. Because a model parameter is generated in each iteration, the version can also be understood as a version of the model parameter generated in the iteration performed by the worker. For example, during a 1^{st} iteration, a version of a to-be-trained model parameter is 0, a version of a trained model parameter obtained through the 1^{st} iteration is 1, and a version of a trained model parameter obtained through a 2^{nd} iteration is 2. | | |
| 16 | 16 | Identifier scatter gather list (IDs Scatter Gather List, ID_SGL) | The identifier scatter gather list field indicates an element identifier related to a command. For a get command, an element identifier of an element that needs to be obtained is written into the field of the get command. For a post command, an element identifier of an element that needs to be published may be written into the field of the post command. The SGL is a data organization form. An element identifier in this embodiment of this application may be organized in an SGL form. Certainly, in this embodiment of this application, the element identifier may be alternatively in another organization form. The SGL is merely used as an example herein. | | |
| 32 | 16 | Element scatter gather list (values_SGL) | | | |
| | | | The element scatter gather list field indicates an element related to a command. For a get command, information about an element, for example, a virtual address and a data length of the element, that needs to be obtained is written into the field of the get command. For a post command, an element that needs to be published may be written into the field of the post command. The SGL is a data organization form. An element in this embodiment of this application may be organized in an SGL form. Certainly, in this embodiment of this application, the element may be alternatively in another organization form. The SGL is merely used as an example herein. | | |
| | | | The element scatter gather list and the identifier scatter gather list may be notified by the server to the worker when the worker and the server interact with each other. When the worker does not learn the element scatter gather list and the identifier scatter gather list, this field may be alternatively default. | | |
| | | | In different commands, the two fields may be indicated in the following manners: | | |
| | | | Get command | | ID_SGL indicates storage locations of identifiers of elements that need to be obtained by the worker. ID_SGL may be sent by the server to the worker before. |
| | | | | | value SGL points to storage |
| | | | | locations of the elements that need to be obtained by the worker. If the value_SGL field has no value, it may indicate that the get command is a pre-fetch command, and all elements or some elements in a value need to be obtained in advance. | |
| | | | Post command | When identifiers of elements and the elements in a storage node 30 are separately stored, | When identifiers of elements and the elements in a storage node 30 are stored at intervals, |
| | | | | IDs_SGL indicates storage locations of identifiers of elements that need to be published by the worker. Because the identifiers of the elements and the elements are separately stored, storage locations (mainly virtual addresses) of identifiers of a plurality of elements are usually consecutive, and the storage locations of the identifiers of the elements pointed to by IDs_SGL are consecutive. | IDs_SGL indicates storage locations of identifiers of elements that need to be published by the worker. Because the identifiers of the elements and the elements are stored at intervals, storage locations (mainly virtual addresses) of identifiers of a plurality of elements are nonconsecutive, and the storage locations of the identifiers of the elements pointed to by IDs_SGL may be nonconsecutive. |
| | | | | values_SGL points to storage locations of the elements that need to be published by the worker. After receiving the command and the elements that need to be published, the server side stores the elements in the storage locations indicated by | |
| | | | | | values_SGL may be default or indicate storage locations of the elements. When values_SGL is default, the server side determines the storage locations of the elements after receiving the command and the elements that need |
| | | | | values_SGL. | to be published. |
| | | | | values_SGL may be alternatively default. | |
| 48 | 1 | Identifier type (ID_type) | This field indicates a type of an identifier carried in a command. For example, a value 1 indicates that the identifier is an array-type identifier, a value 0 indicates that the identifier is a linear identifier, and a value 2 indicates that the identifier is a group identifier. | | |
| 49 | 1 | Identifier mask (ID_mask) | This field is applicable to a case in which a type of an element identifier is a group identifier or an array identifier. For descriptions of the identifier mask, refer to the foregoing descriptions. Details are not described herein again. | | |
| 50 | | Reserved bits (reserved) | Not used | | |

The offset describes an offset of a field in the SQE and is measured in bytes (bytes). The length describes a length of a field in the SQE and is measured in bytes (bytes). One SQE has a total of 64 bytes.

Step 602: The server receives the get command, and reads, based on the get command, the to-be-trained model parameter requested by the worker.

The server reads the get command from an extraction queue, determines the identifier of the to-be-trained model parameter carried in the get command, and reads, based on the identifier of the to-be-trained model parameter, the to-be-trained model parameter from the array to which the to-be-trained model parameter belongs.

Data in a storage node 30 in which the server is located is organized in a form of an array. Elements in the array are stored in a storage medium 302 of the storage node 30. The elements in the array are stored in a segment of storage space in the storage medium 302. In the storage space, these elements may be arranged consecutively, or may be arranged at intervals. An arrangement manner of the elements is mainly arrangement in a virtual address dimension in the storage space. For example, the consecutive arrangement means that virtual addresses of originals are consecutive, and the arrangement at intervals means that virtual addresses of the elements are nonconsecutive.

When storing each element in the array, the storage node 30 in which the server is located further needs to store an identifier of each element in the array. There is an association relationship between a storage location of the identifier that is of each element and that is stored in the storage node 30 and a storage location of the element identified by the identifier. In this way, the server can determine, based on an identifier of an element and the association relationship between the storage locations, the element identified by the identifier.

The following describes, by using an example in which the storage node 30 stores an array, two storage manners in which the storage node 30 stores each element in the array and an identifier of the element.
(1) Each element in the array and the identifier of the element are separately stored.

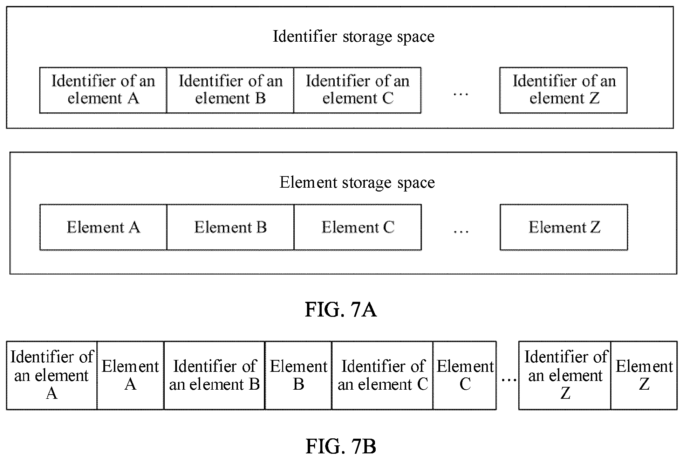

As shown in FIG. 7A, each element in an array and an identifier of each element are separately stored in different storage spaces. To be specific, each element in the array is stored in one storage space. For ease of description, the storage space is referred to as an element storage space. The identifier of each element in the array is stored in another storage space. For ease of description, the storage space is referred to as an identifier storage space.

An arrangement order of the elements in the array in the element storage space is consistent with an arrangement order of the identifiers of the elements in the identifier storage space. It can be learned that, if a location of an identifier of an element in the identifiers of the plurality of elements in the array is determined, a location of a corresponding element in the plurality of elements in the array can be determined from the element storage space.

When the storage node 30 stores each element in the array and the identifier of the element in this manner, the server may search the identifier storage space for an identifier of an element based on the identifier of the to-be-trained model parameter; and based on a location of the found identifier of the element in the identifiers of the plurality of elements in the array, determine a location, in the plurality of elements in the array, of the element indicated by the identifier of the element in the element storage space, to read the element from the element storage space. The read element is the to-be-trained model parameter.

When the identifier of the to-be-trained model parameter is an identifier of an element (for example, an array-type identifier or a linear identifier), the server may directly search the identifier storage space for the identifier of the to-be-trained model parameter based on the identifier of the to-be-trained model parameter. When the identifier of the to-be-trained model parameter indicates a plurality of elements in the array (for example, the identifier of the to-be-trained model parameter is a group identifier or the identifier of the to-be-trained model parameter includes identifiers of the plurality of elements), the server may determine the identifiers of the plurality of elements based on the identifier of the to-be-trained model parameter, and search the identifier storage space for the identifiers of the plurality of elements.

(2) Each element in the array and the identifier of the element are stored in a hybrid manner.

Hybrid storage means that each element in the array and the identifier of each element are stored in a same storage space. Each element and the identifier of each element in the storage space are arranged at intervals. To be specific, in the storage space, every P elements indicated by identifiers of the P elements are placed after the identifiers of the P elements, where P is a positive integer. Certainly, in some scenarios, identifiers of every P elements may be alternatively placed after the P elements indicated by the identifiers of the P elements. The following uses only an example for description in which every P elements indicated by identifiers of the P elements are placed after the identifiers of the P elements.

FIG. 7B is a diagram of hybrid storage of each element in an array and an identifier of the element when P is equal to 1. In FIG. 7B, every element indicated by an identifier of the element is placed after the identifier of the element.

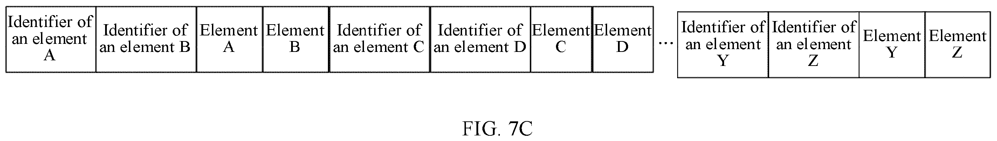

FIG. 7C is a diagram of hybrid storage of each element in an array and an identifier of the element when P is equal to 2. In FIG. 7C, every two elements indicated by identifiers of the two elements are placed after the identifiers of the two elements.

When the storage node 30 stores each element in the array and the identifier of the element in this manner, the server may search the storage space for an identifier of an element based on the identifier of the to-be-trained model parameter. Then, at a storage location after the identifier of the element in the storage space, the server searches for the element indicated by the identifier of the element. Based on a location of the identifier of the element in identifiers of P adjacent elements, the server determines a location, in the P elements, of the element indicated by the identifier of the element in the P elements after the identifiers of the P elements, to read the element. The read element is the to-be-trained model parameter.

When the identifier of the to-be-trained model parameter is an identifier of an element (for example, an array-type identifier or a linear identifier), the server may directly search the storage space for the identifier of the to-be-trained model parameter based on the identifier of the to-be-trained model parameter. When the identifier of the to-be-trained model parameter indicates a plurality of elements in the array (for example, the identifier of the to-be-trained model parameter is a group identifier or the identifier of the to-be-trained model parameter includes identifiers of the plurality of elements), the server may determine the identifiers of the plurality of elements based on the identifier of the to-be-trained model parameter, and search the storage space for the identifiers of the plurality of elements.

Step 603: After reading the to-be-trained model parameter, the server sends a response to the get command and the to-be-trained model parameter to the worker. The server may transmit a trained model parameter to the worker based on data writing (write) or reading (read) in the NVMe.

The server adds the response to the get command to a completion queue. The response to the get command added to the completion queue satisfies a format of a CQE of the completion queue.

To enable the worker to access the server based on the NVMe to obtain or update an element in the array, definitions of fields in the CQE are provided, as described in Table 3.

**Table 3**

| Offset (offset) | Length (length) | Field name (field) | Description (description) |
|---|---|---|---|
| 0 | 4 | Reserved bits | Not used |
| 4 | 4 | Array identifier (array ID) | A numeric identifier identifies an array to be accessed. |
| 8 | 4 | Version (version) | This field indicates a version associated with a command. A definition of the version is the same as the definition of the version in the SQE. For details, refer to the foregoing descriptions. Details are not described herein again. |
| 12 | 2 | CID | This field is a command identifier that identifies a pairing request/response. |
| 14 | 2 | Status (status) | This field describes an execution status of an SQE associated with the CQE, that is, an execution status of the corresponding get command or post command. |
| | | | A status "OK" (OK) indicates that the get command or the post command is successfully executed. |
| | | | A status "retry" (Retry) indicates that an NVMe controller 301 rejects the get command or the post command. |
| | | | A status "failed" (Failed) indicates that the get command or the post command is unsuccessfully executed. For example, the array to be accessed does not exist or no element exists in the array. Alternatively, different error codes may be set to indicate different failure causes. |
| 0 | 4 | Reserved bits (reserved) | Not used |

The offset describes an offset of a field in the CQE and is measured in bytes (bytes). The length describes a length of a field in the CQE and is measured in bytes (bytes). One CQE has a total of 16 bytes.

Step 604: The worker obtains the response to the get command and the to-be-trained model parameter, trains the to-be-trained model parameter to complete one iteration, and obtains a trained model parameter.

In the iteration, the worker obtains the to-be-trained model parameter, and configures the to-be-trained model parameter in a model. For example, each sample in training samples is input into the model. The worker adjusts, based on an output result of the model by using an SGD method, the model parameter configured in the model. In the SGD, the worker computes a gradient of the model in the iteration based on the output result of the model, and adjusts, based on the gradient, the model parameter configured in the model, to obtain the trained model parameter in the iteration.

Step 605: After completing the one iteration, the worker sends a post command and the trained model parameter to the server. The worker may transmit the trained model parameter to the server based on data writing (write) or reading (read) in the NVMe. The post command may carry an identifier of the trained model parameter. The identifier of the trained model parameter is the same as an identifier of a trained model parameter carried in the get command. In this case, the server requests to overwrite, by using the trained model parameter, the to-be-trained model parameter stored on the server side. The post command further carries an identifier of an array to which the trained model parameter belongs. The identifier of the array to which the trained model parameter belongs is the same as the identifier that is of the array to which the to-be-trained model parameter belongs and that is carried in the get command in step 601.

The worker adds the trained model parameter in the iteration to the post command. The worker adds the post command to the submission queue by using the NVMe driver on the computing node 20. The post command added to the submission queue satisfies the format of the SQE of the submission queue. For the format of the SQE, refer to the descriptions in Table 1. Details are not described herein again.

Step 606: The server receives the post command and the trained model parameter, and updates the trained model parameter to the array to which the trained model parameter belongs.

When updating the trained model parameter to the array to which the trained model parameter belongs, the server may write the trained model parameter into the array to which the trained model parameter belongs. The server reads the post command from an extraction queue, parses the identifier of the trained model parameter, determines, based on the identifier of the trained model parameter, the to-be-trained model parameter that is in the array to which the to-be-trained model parameter belongs and that is stored in the storage node 30, and updates the to-be-trained model parameter in the array to the trained model parameter.

Alternatively, when updating the trained model parameter to the array to which the trained model parameter belongs, the server may first process the trained model parameter, and write a processed model parameter into the array to which the processed model parameter belongs. For example, the server configures a corresponding optimization manner (for example, rounding or adding a redundancy) for the array to which the trained model parameter belongs (optimization manners of all elements in the array are the same), or configures a corresponding optimization manner (for example, rounding or adding a redundancy) for elements in the array to which the trained model parameter belongs (optimization manners of all the elements in the array may be different). The server may process the trained model parameter based on the optimization manner to obtain the processed model parameter, and then update, to the trained model parameter, the to-be-trained model parameter in the array to which the trained model parameter belongs. For another example, the server obtains, from a plurality of different workers, a plurality of groups of trained model parameters generated through training performed for a same group of to-be-trained model parameters (the group of to-be-trained model parameters includes one or more to-be-trained model parameters). The server needs to perform aggregation processing on the plurality of groups of trained model parameters to finally form one group of trained model parameters, and stores the finally formed group of trained model parameters in an array to which the finally formed group of trained model parameters belongs, that is, updates the group of to-be-trained model parameters in the array to the finally formed group of trained model parameters.

A specific aggregation processing manner is not limited in embodiments of this application. For example, the server may aggregate two groups of trained model parameters into one group of trained model parameters through weighted averaging. Corresponding weights (the weights may be preset) are configured for model parameters at same locations in the two groups of trained model parameters, and weighted averaging is performed on the model parameters at the same locations, to obtain a plurality of average values (one average value may be obtained through weighted averaging performed on model parameters at a same location in each group of trained model parameters). A set of the plurality of average values is a group of aggregated trained model parameters. The aggregation processing manner may be preconfigured in the server.

In step 604 to step 606, that the worker obtains the trained model parameter through one iteration and sends the trained model parameter to the server is used as an example. In actual application, alternatively, when completing one iteration, the worker side may compute only a gradient of the model in the iteration, and send the gradient and the to-be-trained model parameter to the server by using the post command. The worker sends, to the server, the post command carrying the gradient. The server reads the post command from the extraction queue, determines the gradient of the model in the iteration and the identifier of the to-be-trained model parameter, determines, based on the identifier of the to-be-trained model parameter, the to-be-trained model parameter that is in the array to which the to-be-trained model parameter belongs and that is stored in the storage node 30, and updates the to-be-trained model parameter by using the gradient. An updated model parameter is the trained model parameter. In other words, the worker may hand over an operation of adjusting the to-be-trained model parameter based on the gradient to obtain the trained model parameter to the server for execution.

A plurality of workers are allowed to be deployed in a model training system. The plurality of workers complete model training cooperatively. Each worker may be responsible for training only some model parameters in the model. Then, after completing each iteration, each worker may send an obtained trained model parameter in the iteration (or a gradient in the iteration) to the server by using a post command. The server may aggregate trained model parameters fed back by the plurality of workers (or a plurality of groups of trained model parameters obtained by the server by using gradients in the iteration provided by the workers). "Aggregation" means updating, to an array, the trained model parameters fed back by the plurality of workers. The array is an array to which to-be-trained model parameters obtained by the workers from the server belong. Herein, a manner of updating, to the array, the trained model parameters fed back by the plurality of workers is similar to the manner mentioned in step 606. To be specific, the trained model parameters fed back by the plurality of workers may be directly written into the array, or the trained model parameters fed back by the plurality of workers may be processed and then processed model parameters may be written into the array.

The trained model parameters fed back by the plurality of workers are involved in a process in which the server aggregates the trained model parameters fed back by the plurality of workers. To better distinguish between trained model parameters fed back by different workers, a trained model parameter generated by one worker in one iteration is referred to as a group of trained model parameters, and correspondingly a to-be-trained model parameter that needs to be obtained by one worker in one iteration is referred to as a group of to-be-trained model parameters. The trained model parameters fed back by the plurality of workers mentioned in the foregoing content may be a plurality of groups of trained model parameters obtained through training performed for a same group of to-be-trained model parameters, or may be a plurality of groups of trained model parameters obtained through training performed for different groups of to-be-trained model parameters. Alternatively, the trained model parameters fed back by the plurality of workers may include a plurality of groups of trained model parameters obtained through training performed for a same group of to-be-trained model parameters, and also include a plurality of groups of trained model parameters obtained through training performed for different groups of to-be-trained model parameters.

A manner in which the server may aggregate the plurality of groups of trained model parameters fed back by the plurality of workers (or the plurality of groups of trained model parameters obtained by the server by using the gradients in the iteration provided by the workers) is not limited in embodiments of this application. Three different aggregation manners are provided in embodiments of this application, and are separately described below.

Before the aggregation manners are described, a concept of "version" is introduced. In embodiments of this application, a worker side and a server side maintain respective versions.

For the worker, a version maintained on the worker side is used to indicate an iteration performed by the worker. Each iteration is corresponding to one version, and the version continuously varies with the iteration. For example, a version increases by one each time one iteration is completed. For example, in addition to a group of trained model parameters, a post command further carries a version of the group of trained model parameters. The version of the group of trained model parameters carried in the post command is the version maintained on the worker side. In this case, the model parameter carried in the post command is a group of trained model parameters generated in an iteration corresponding to the version. Correspondingly, a corresponding version in the post command may be the version maintained on the worker side. The version maintained on the worker side can reflect work progress of the worker. To be specific, a larger version indicates a larger quantity of iterations that have been completed by the worker and a faster iteration speed.

For the server, a version maintained on the server side is used to indicate a version of a model parameter obtained through aggregation performed by the server on a plurality of groups of trained model parameters. In one round of aggregation, the server can aggregate K groups of trained model parameters, to complete the one round of aggregation, where K is a positive integer. After the one round of aggregation, a model parameter is generated through the round of aggregation. The N groups of trained model parameters may be K groups of trained model parameters fed back by K workers in a same iteration, and the K groups of trained model parameters may include K groups of trained models in trained model parameters fed back by the plurality of workers in a plurality of iterations. One round of aggregation herein may be an aggregation operation of sequentially updating the K groups of trained model parameters to an array, or may be an aggregation operation of simultaneously updating the K groups of trained model parameters obtained through accumulation to an array. Each version is corresponding to one round of aggregation, and the version continuously varies with a plurality of rounds of aggregation. For example, a version increases by one each time one round of aggregation iteration is completed. The version maintained on the server side can reflect work progress of the plurality of workers overall. To be specific, a larger version indicates a larger quantity of iterations that have been completed cooperatively by the plurality of workers and a faster overall iteration speed.

### Aggregation manner 1: Fully synchronous aggregation manner

In the fully synchronous aggregation manner, the server side can be aware of a version maintained on a client side. In other words, the server can parse a version carried in a post command.

The fully synchronous aggregation manner means that in one round of aggregation, the server updates, to an array, K groups of received trained model parameters fed back by a plurality of workers in a same iteration. In addition, in the fully synchronous aggregation manner, iteration speeds of the plurality of workers are kept consistent, and a worker with a faster iteration speed needs to wait for a worker with a slower iteration speed to complete the iteration, and then the workers start a next iteration together.

In the fully synchronous aggregation manner, in one round of aggregation, the server is allowed to update, to an array, only K groups of trained model parameters fed back by K workers in a same iteration, where K is not greater than N, and N is a quantity of workers in the model training system. For N-K groups of trained model parameters fed back by remaining N-K workers in the same iteration, the server may select a post command used to publish any group of the N-K groups of trained model parameters, reject a post command used to publish any group of the N-K groups of trained model parameters, or indicate the N-K workers to make a retry (that is, a status in a response to a post command used to publish any group of the N-K groups of trained model parameters is marked as "retry"). An aggregation boundary value in the fully synchronous aggregation manner is K, and the aggregation boundary value describes a quantity of groups of trained model parameters that need to be aggregated by the server in one round of aggregation.

In the fully synchronous aggregation manner, there are many manners for ensuring that the iteration speeds of the plurality of workers are kept consistent. For example, the plurality of workers are allowed to interact with each other. When completing one iteration, any worker notifies other workers that the one iteration has been completed. After determining that the plurality of workers all complete the one iteration, any worker starts to perform a next iteration, and sends a get request to the server, to obtain a group of to-be-trained model parameters needed for the next iteration. For another example, the server may control the iteration speeds of the plurality of workers. After completing one iteration (the iteration is marked as an iteration A), a worker with a faster iteration speed sends a get command to the server, to obtain a group of to-be-trained model parameters needed for a next iteration. If the server has not completed a round of aggregation for the iteration A currently, that is, the server is still updating, to an array, K groups of trained model parameters fed back by K workers in the iteration A, and a model parameter has not been generated through the round of aggregation, the server may reject the get command initiated by the worker (that is, mark a status in a response to the get command as "failed"), or indicate the worker to make a retry (that is, mark a status in a response to the get command as "retry"), until the server completes the round of aggregation and generates a model parameter through the round of aggregation. Certainly, the server may alternatively suspend processing of the get command initiated by the worker, and after completing the round of aggregation and generating a model parameter through the round of aggregation, the server feeds back a response to the get command to the worker, and sends, in the response to the get command, the group of to-be-trained model parameters needed for the next iteration. For still another example, a combination of the foregoing two manners may be used. The plurality of workers interact with each other to exchange respective iteration speeds. After the plurality of workers all complete one iteration (the iteration is marked as an iteration A), all the plurality of workers may send get commands to the server, to obtain a group of to-be-trained model parameters needed for a next iteration. If the server has not completed a round of aggregation for the iteration A currently, the server may reject the get commands (that is, mark statuses in responses to the get commands as "failed"), or indicate the workers to make a retry (that is, mark statuses in responses to the get commands as "retry"), until the server completes the round of aggregation and generates a model parameter through the round of aggregation. Certainly, the server may alternatively suspend processing of the get commands initiated by the plurality of workers, and after completing the round of aggregation and generating a model parameter through the round of aggregation, the server separately feeds back responses to the get commands to the plurality of workers, and sends, in the responses to the get requests, the group of to-be-trained model parameters needed for the next iteration.

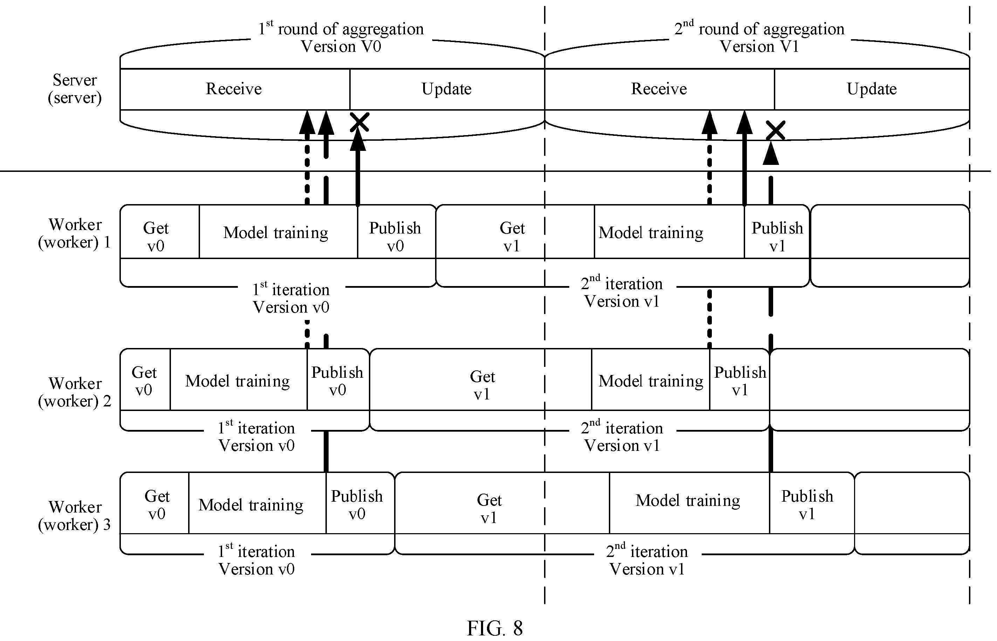

FIG. 8 is a diagram of a fully synchronous aggregation mode according to an embodiment of this application. An aggregation boundary value K is equal to 2, and N is equal to 3. FIG. 8 shows three workers, which are marked as a worker 1, a worker 2, and a worker 3.

In FIG. 8, any worker first obtains, from a server side, a group of to-be-trained model parameters whose version is an initial version v0 (initially, a value of an initial version v0 on the worker side may be consistent with a value of the initial version V0 on the server side), completes a 1^{st} iteration based on the group of to-be-trained model parameters, and feeds back a group of trained model parameters generated in the iteration to the server by using a post command. The post command carries the version v0 of the group of trained model parameters, the version is a version maintained on the worker side and indicates the 1^{st} iteration, and the group of trained model parameters published by using the post command is a trained model parameter generated in the 1^{st} iteration. Then, a 2^{nd} iteration is performed. The worker first obtains, from the server side, a group of to-be-trained model parameters whose version is v1 (the version is a version maintained on the worker side), that is, obtains a group of to-be-trained model parameters needed for the 2^{nd} iteration, completes the 2^{nd} iteration based on the group of to-be-trained model parameters, and feeds back a trained model parameter in the iteration to the server by using a post command. The post command carries the version v1 of the group of trained model parameters, the version is the version maintained on the worker side and indicates the 2^{nd} iteration, and the group of trained model parameters published by using the post command is the trained model parameter generated in the 1^{st} iteration. Next, a 3^{rd} iteration is performed. The worker first obtains, from the server side, a group of to-be-trained model parameters whose version is v2 (the version is a version maintained on the worker side), completes the 3^{rd} iteration based on the group of to-be-trained model parameters, and feeds back a group of trained model parameters generated in the iteration to the server by using a post command. The post command carries the version v2 of the group of trained model parameters, the version is the version maintained on the worker side and indicates the 3^{rd} iteration, and the group of trained model parameters published by using the post command is a trained model parameter generated in the 3^{rd} iteration.

In one round of aggregation, the server updates, to an array, two groups of received trained model parameters that are generated in one iteration and that are fed back by two workers. When receiving a model parameter obtained through training by a remaining one worker in the same iteration, the server may discard the model parameter obtained through training by the worker in the same iteration, or reject a post command that is initiated by the worker and that is used to publish the trained model parameter in the iteration.

In the 1^{st} iteration in FIG. 8, the server receives two groups of trained model parameters that are generated in the iteration and that are fed back by the worker 2 and the worker 3, and discards two groups of trained model parameters that are generated in the iteration and that are fed back by the worker 1; and aggregates the two groups of trained model parameters that are generated in the iteration and that are fed back by the worker 2 and the worker 3, to complete a 1^{st} round of aggregation, generates a model parameter whose version is V1, and enters a next round of aggregation. In a process in which the server performs the 1^{st} round of aggregation, the version of the model parameter stored in the server is the initial version V0. In the 2^{nd} iteration, the server receives two groups of trained model parameters that are generated in the iteration and that are fed back by the worker 1 and the worker 2, and discards one group of trained model parameters that is generated in the iteration and that is fed back by the worker 3; and aggregates the two groups of trained model parameters that are generated in the iteration and that are fed back by the worker 1 and the worker 2, to complete a 2^{nd} round of aggregation, and generates a model parameter whose version is V2. When the server generates the model parameter whose version is V1 and enters the 2^{nd} round of aggregation, the model parameter stored in the server is updated, and is changed to the model parameter whose version is V1. In a process in which the server performs the 2^{nd} round of aggregation, the version of the model parameter stored in the server is the initial version V1.

### Aggregation manner 2: Partially synchronous aggregation manner

In the partially synchronous aggregation manner, the server side can be aware of a version maintained on a client side. In other words, the server can parse a version carried in a post command. Alternatively, the server side may be unaware of a version maintained on a client side. In other words, the server does not need to parse a version carried in a post command or cannot parse a version carried in a post command.

In the partially synchronous aggregation manner, the server updates, to an array, K groups of received trained model parameters fed back by a plurality of workers. In addition, in the partially synchronous aggregation manner, a worker with a faster iteration speed performs a next iteration without waiting for a worker with a slower iteration speed to complete the iteration. Work progress of any worker is not affected by work progress of other workers.

When the server side is aware of the version maintained on the client side, in one round of aggregation, the server updates, to an array, K groups of received trained model parameters fed back by a plurality of workers in a same iteration. When the server side is unaware of the version maintained on the client side, in one round of aggregation, the server updates, to an array, K groups of received trained model parameters fed back by a plurality of workers.

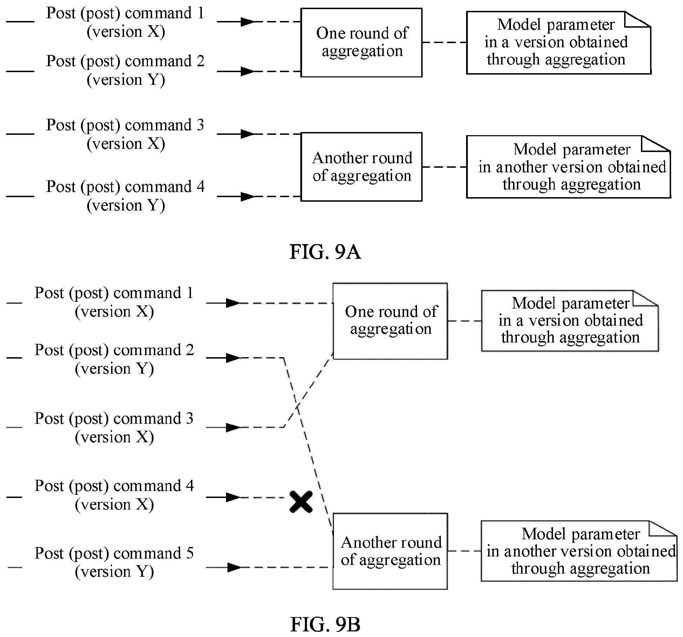

FIG. 9A and FIG. 9B show a manner in which a server completes a round of aggregation when the server side is unaware of a version maintained on a client side and the server side is aware of the version maintained on the client side.

FIG. 9A is a diagram of performing a plurality of rounds of aggregation by the server when the server side is unaware of the version maintained on the client side. In FIG. 9A, the server receives four post commands, where each post command is used to publish a group of trained model parameters and carries a version used to indicate an iteration. For example, K is equal to 2. The server may divide the post commands into two groups according to a receiving order of the post commands, and separately perform two rounds of aggregation. The server aggregates two groups of trained model parameters published by using a post command 1 (a version X) and a post command 2 (a version Y) that are first received, to complete one round of aggregation, where versions carried in the post command 1 and the post command 2 are different. The server aggregates two groups of trained model parameters published by using a post command 3 (a version X) and a post command 4 that are subsequently received, to complete another round of aggregation, where versions carried in the post command 3 and the post command 4 (a version Y) are different. Processes in which the server completes the two rounds of aggregation may be concurrent.

FIG. 9B is a diagram of performing a plurality of rounds of aggregation by the server when the server side is aware of the version maintained on the client side. In FIG. 9B, the server receives five post commands, where each post command is used to publish a group of trained model parameters and carries a version used to indicate an iteration. For example, K is equal to 2. The server may divide the post commands into two groups according to a receiving order of the post commands, and separately perform two rounds of aggregation. The server aggregates two groups of trained model parameters published by using a post command 1 (a version X) and a post command 3 (a version X) that carry a same version, to complete one round of aggregation. Although a version carried in the post command 4 (a version X) is the same as the version carried in the post command 1 and the post command 3, when K is equal to 2, the post command 4 is received later than other post commands, and the server may discard the post command 4 or directly reject the post command 4.

The server aggregates two groups of trained model parameters published by using a post command 2 (a version Y) and a post command 5 (a version Y) that carry a same version, to complete another round of aggregation. Processes in which the server completes the two rounds of aggregation may be concurrent.

Because work progress of any worker is no longer affected by work progress of other workers, there may be a case in which the worker separately initiates get commands in two iterations to obtain groups of to-be-trained model parameters needed for the current iterations, and when the server receives the two get commands, a model parameter on the server side has not been updated and a version of the model parameter has not changed. In other words, when receiving the two get commands, the server is always in a state in which one round of aggregation is performed and the round of aggregation has not been completed. In this case, when processing the get command, the server may send a model parameter in a current latest version as a group of to-be-trained model parameters to the worker (generally, some or all of the model parameter in the latest version is used as a group of to-be-trained model parameters, and this is merely a simplified description herein). The worker may complete the iteration by using the group of to-be-trained model parameters. In other words, the worker completes another iteration by using a group of to-be-trained model parameters obtained in a previous iteration process. An aggregation threshold is configured in the partially synchronous aggregation manner. The aggregation threshold indicates a maximum quantity of iterations allowed to be completed by one worker by using a group of to-be-trained model parameters in a same version. When a quantity of iterations completed by the worker by using the group of to-be-trained model parameters in the same version is greater than the aggregation threshold, that is, a quantity of times that the server sends the group of to-be-trained model parameters in the same version to the worker is greater than the aggregation threshold, the server may reject a get command initiated by the worker or indicate the worker to make a retry, until the version of the model parameter on the server side is updated.

When the server side is aware of the version maintained on the client side, an aggregation boundary value K may be configured for the partially synchronous aggregation manner. In other words, in one round of aggregation, the server is allowed to update, to an array, only trained model parameters fed back by K workers in a same iteration, where K is not greater than N, and N is a quantity of workers in the model training system. The server may choose to discard or reject trained model parameters fed back by remaining N-K workers in the same iteration.

When the server side is unaware of the version maintained on the client side, an aggregation boundary value K may be configured for the partially synchronous aggregation manner. In other words, in one round of aggregation, the server is allowed to update only K groups of trained model parameters to an array, where K is a positive integer, and one group of trained model parameters is a trained model parameter generated by one worker in one iteration. One group of trained model parameters may also be referred to as a group of trained model parameters generated by a worker in one iteration.

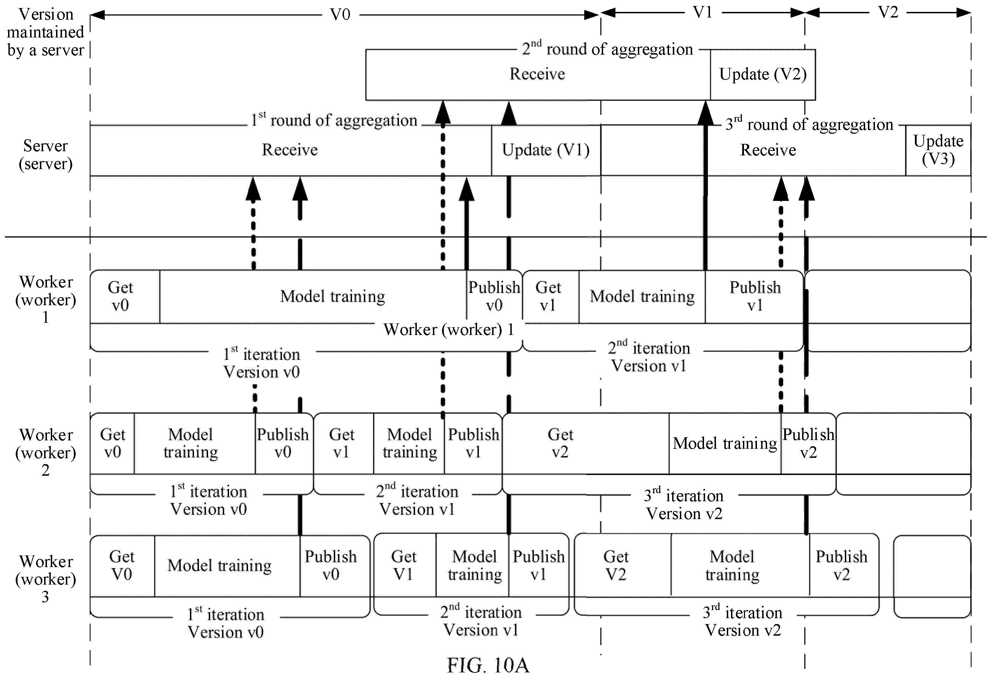

FIG. 10A is a diagram of a partially synchronous aggregation mode according to an embodiment of this application. A server in FIG. 10A can be aware of a version maintained on a client side. An aggregation boundary value K is equal to 3, and N is equal to 3. FIG. 3 shows three workers, which are marked as a worker 1, a worker 2, and a worker 3. An aggregation threshold is 2, and a maximum quantity of iterations allowed to be completed by any worker by using a group of to-be-trained model parameters in a same version is 2.

A process in which the worker interacts with the server to complete an iteration is similar to the process in which the worker interacts with the server to complete an iteration in FIG. 8. For details, refer to the foregoing descriptions. Details are not described herein again.

In one round of aggregation, the server updates, to an array, three groups of received trained model parameters fed back by the three workers in one iteration. In FIG. 10A, in a 1^{st} iteration, the server receives three groups of trained model parameters that are generated in the iteration and that are fed back by the worker 1, the worker 2, and the worker 3, completes a 1^{st} round of aggregation, and generates a model parameter whose version is V1. In a process in which the server performs the 1^{st} round of aggregation, a version of a model parameter stored in the server is an initial version V0. In a 2^{nd} iteration, the server receives three groups of trained model parameters that are generated in the iteration and that are fed back by the worker 1, the worker 2, and the worker 3, completes a 2^{nd} round of aggregation, and generates a model parameter whose version is V2. In a process in which the server performs the 2^{nd} round of aggregation, because the server has completed the 1^{st} round of aggregation, the version of the model parameter stored in the server is changed from V0 to V1. In a 3^{rd} iteration, the server receives trained model parameters fed back by the worker 1, the worker 2, and the worker 3 in the iteration, completes a 3^{rd} round of aggregation, and generates a model parameter whose version is V3. In a process in which the server performs the 3^{rd} round of aggregation, because the server has completed the 2^{nd} round of aggregation, the version of the model parameter stored in the server is changed from V1 to V2.

In FIG. 10A, when a worker requests, from the server, to obtain a group of to-be-trained model parameters needed for a current iteration, if a version maintained on the server side has not been updated, that is, the server has not completed aggregation, the server may feed back, to the worker, a model parameter in a latest version currently maintained on the server side. For example, in FIG. 10A, when performing the 2^{nd} iteration, the worker 2 needs to obtain, by using a get command, a group of to-be-trained model parameters needed for the 2^{nd} iteration. However, when the worker 2 initiates the get command request, the server side is still performing the 1^{st} round of aggregation, the model parameter whose version is V1 has not been generated, and a model parameter in a latest version currently maintained on the server side is the model parameter whose version is V0. In other words, in the 2^{nd} iteration, when the worker 2 requests, from the server, to obtain the to-be-trained model parameter, the server may send the model parameter whose version is V0 to the worker 2 again, so that the worker 2 completes the 2^{nd} iteration. The worker 2 has performed two iterations by using the model parameter whose version is V0, and the aggregation threshold is reached. When performing the 3^{rd} iteration, the worker 2 needs to wait until the version maintained on the server side becomes V1, to obtain the to-be-trained model parameter whose version is V1.

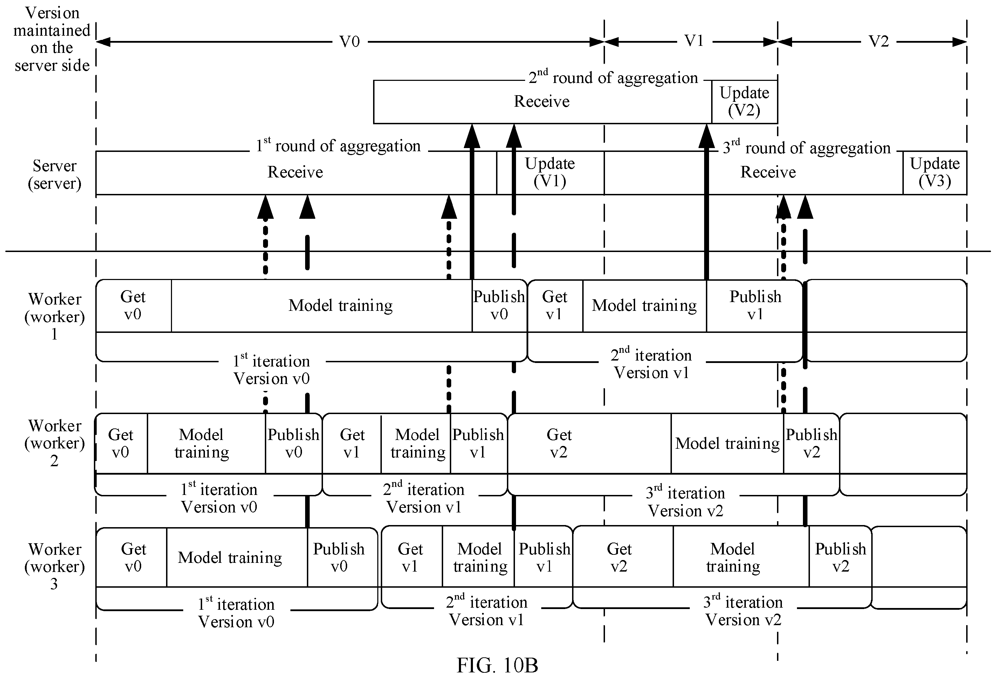

FIG. 10B is a diagram of a partially synchronous aggregation mode according to an embodiment of this application. A server in FIG. 10B is unaware of a version maintained on a client side. An aggregation boundary value M is equal to 3, and N is equal to 3. FIG. 3 shows three workers, which are marked as a worker 1, a worker 2, and a worker 3. An aggregation threshold is 2, and a maximum quantity of iterations allowed to be completed by any worker by using a to-be-trained model parameter in a same version is 2.

A process in which the worker interacts with the server to complete an iteration is similar to the process in which the worker interacts with the server to complete an iteration in FIG. 8. For details, refer to the foregoing descriptions. Details are not described herein again.

In one round of aggregation, the server updates three groups of received trained model parameters to an array, and obtains a model parameter through the round of aggregation. In FIG. 10B, in a process of a 1^{st} round of aggregation, the server receives two groups of model parameters obtained through training by the worker 2 in a 1^{st} iteration and a 2^{nd} iteration and one group of model parameters obtained through training by the worker 3 in a 1^{st} iteration process, performs the 1^{st} round of aggregation, and generates a model parameter whose version is V1. In the process in which the server performs the 1^{st} round of aggregation, a version of a model parameter stored in the server is an initial version V0. In a process of a 2^{nd} round of aggregation, the server receives one group of model parameters obtained through training by the worker 1 in a 1^{st} iteration process, one group of model parameters obtained through training by the worker 2 in a 3^{rd} iteration, and two groups of model parameters obtained through training by the worker 1 in a 2^{nd} iteration, performs the 2^{nd} round of aggregation, and generates a model parameter whose version is V2. In the process in which the server performs the 2^{nd} round of aggregation, because the server has completed the 1^{st} round of aggregation, the version of the model parameter stored in the server is V1.

In FIG. 10B, when a worker requests, from the server, to obtain a group of to-be-trained model parameters needed for a current iteration, if a version maintained on the server side has not been updated, that is, the server has not completed aggregation, the server may feed back, to the worker, a model parameter in a latest version currently maintained on the server side. For example, in FIG. 10B, when performing the 2^{nd} iteration, the worker 3 needs to obtain, by using a get command, a group of to-be-trained model parameters needed for the 2^{nd} iteration. However, when the worker 3 initiates the get command request, the model parameter whose version is V1 has not been generated, and a model parameter in a latest version currently maintained on the server side is the model parameter whose version is V0. In other words, in the 2^{nd} iteration, when the worker 3 requests, from the server, to obtain the to-be-trained model parameter, the server may send the model parameter whose version is V0 to the worker 3 again, so that the worker 3 completes the 2^{nd} iteration. The worker 3 has performed two iterations by using the model parameter whose version is V0, and the aggregation threshold is reached. When performing a 3^{rd} iteration, the worker 3 needs to wait until the version maintained on the server side becomes V1, to obtain the to-be-trained model parameter whose version is V1.

### Aggregation manner 3: Fully asynchronous aggregation manner

In the fully asynchronous aggregation manner, the server side is unaware of a version maintained on a client side. In other words, the server does not need to parse a version carried in a post command or cannot parse a version carried in a post command.

The fully asynchronous aggregation manner means that the server updates K groups of trained model parameters to an array after receiving the K groups of trained model parameters, to complete one round of aggregation.

A worker with a faster iteration speed performs a next iteration without waiting for a worker with a slower iteration speed to complete the iteration. Work progress of any worker is not affected by work progress of other workers. In the fully asynchronous aggregation manner, no aggregation threshold may be set, or an aggregation threshold may be set to an infinity. If no aggregation threshold is set or an aggregation threshold is set to an infinity, it indicates that a quantity of iterations completed by a worker by using a to-be-trained model parameter in a same version is not limited in the fully asynchronous aggregation manner. In other words, if no aggregation threshold is set or an aggregation threshold is set to an infinity, it indicates that a quantity of iterations completed by a worker by using a group of to-be-trained model parameters in a same version in the fully asynchronous aggregation manner is infinite. Certainly, in some scenarios, the aggregation threshold in the fully asynchronous aggregation manner is allowed to be equal to a specific value.

In the fully asynchronous aggregation manner, an aggregation boundary value K may be configured. In other words, in one round of aggregation, the server is allowed to update only K groups of trained model parameters to an array, where one group of trained model parameters is a model parameter obtained through training by one worker in one iteration.

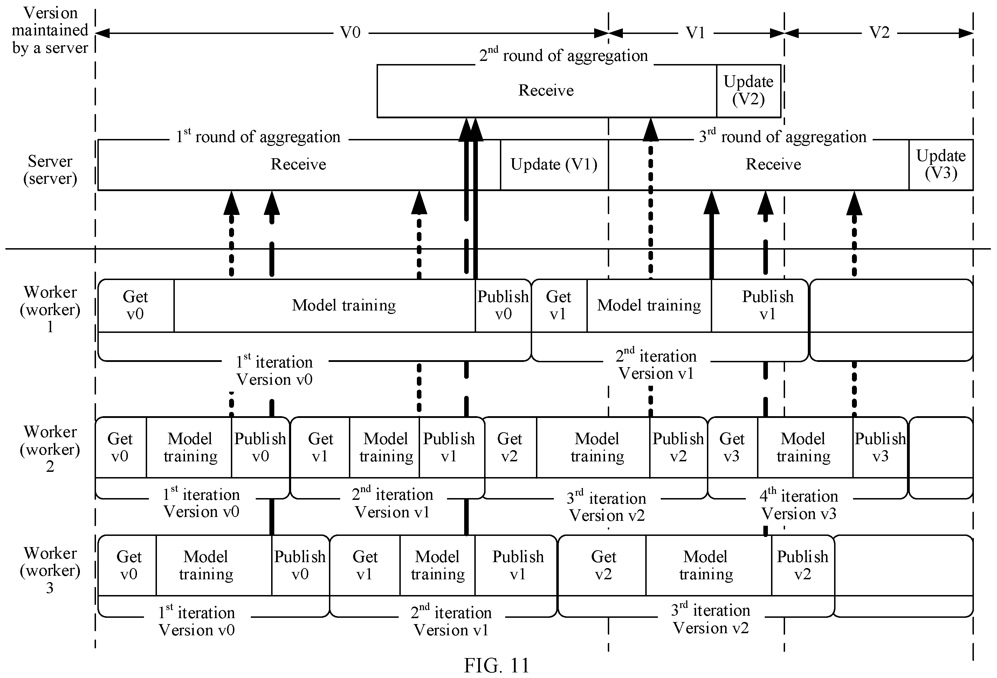

FIG. 11 is a diagram of a fully asynchronous aggregation mode according to an embodiment of this application. A server in FIG. 11 is unaware of a version maintained on a client side. An aggregation boundary value K is equal to 3, and N is equal to 3. FIG. 11 shows three workers, which are marked as a worker 1, a worker 2, and a worker 3. An aggregation threshold is an infinity, and a quantity of iterations completed by any worker by using a to-be-trained model parameter in a same version is not limited.

A process in which the worker interacts with the server to complete an iteration is similar to the process in which the worker interacts with the server to complete an iteration in FIG. 8. For details, refer to the foregoing descriptions. Details are not described herein again.

Each time the server receives three groups of trained model parameters, the server updates the three groups of trained model parameters to an array, completes one round of aggregation, and obtains a model parameter through the round of aggregation. In FIG. 11, in a process of a 1^{st} round of aggregation, the server receives two groups of model parameters obtained through training by the worker 2 in a 1^{st} iteration and a 2^{nd} iteration and one group of model parameters obtained through training by the worker 3 in a 1^{st} iteration process, performs the 1^{st} round of aggregation, and generates a model parameter whose version is V1. In the process in which the server performs the 1^{st} round of aggregation, a version of a model parameter stored in the server is a version V0. In a process of a 2^{nd} round of aggregation, the server receives one group of model parameters obtained through training by the worker 1 in a 1^{st} iteration process, one group of model parameters obtained through training by the worker 2 in a 3^{rd} iteration, and two groups of model parameters obtained through training by the worker 3 in a 2^{nd} iteration, performs the 2^{nd} round of aggregation, and generates a model parameter whose version is V2. In the process in which the server performs the 2^{nd} round of aggregation, because the server has completed the 1^{st} round of aggregation, the version of the model parameter stored in the server is changed from V0 to V1. In a process of a 3^{rd} round of aggregation, the server receives one group of model parameters obtained through training by the worker 1 in a 2^{nd} iteration process, one group of model parameters obtained through training by the worker 2 in a 4^{th} iteration, and one group of model parameters obtained through training by the worker 3 in a 3^{rd} iteration, performs the 3^{rd} round of aggregation, and generates a model parameter whose version is V3. In the process in which the server performs the 3^{rd} round of aggregation, because the server has completed the 2^{nd} round of aggregation, the version of the model parameter stored in the server is changed from V1 to V2.

In FIG. 11, when a worker requests, from the server, to obtain a group of to-be-trained model parameters needed for a current iteration, if a version maintained on the server side has not been updated, that is, the server has not completed aggregation, the server may feed back, to the worker, a model parameter in a latest version currently maintained on the server side. For example, in FIG. 11, when performing the 2^{nd} iteration, the worker 2 needs to obtain, by using a get command, a group of to-be-trained model parameters needed for the 2^{nd} iteration. However, when the worker 2 initiates the get command request, the model parameter whose version is V1 has not been generated, and a model parameter in a latest version currently maintained on the server side is the model parameter whose version is V0. In other words, in the 2^{nd} iteration, when the worker 2 requests, from the server, to obtain the to-be-trained model parameter, the server may send the model parameter whose version is V0 to the worker 2 again, so that the worker 2 completes the 2^{nd} iteration. When performing the 3^{rd} iteration, the worker 2 needs to obtain, by using a get command, a group of to-be-trained model parameters needed for the 3^{rd} iteration. However, when the worker 2 initiates the get command request, the model parameter whose version is V1 has not been generated, and a model parameter in a latest version currently maintained on the server side is the model parameter whose version is V0. In other words, in the 3^{rd} iteration, when the worker 2 requests, from the server, to obtain the group of to-be-trained model parameters needed for the 3^{rd} iteration, the server may send the model parameter whose version is V0 to the worker 2 again, so that the worker 2 completes the 3^{rd} iteration. When performing the 4^{th} iteration, the worker 2 needs to obtain, by using a get command, a group of to-be-trained model parameters needed for the 4^{th} iteration. However, when the worker 2 initiates the get command request, the model parameter whose version is V2 has not been generated, and a model parameter in a latest version currently maintained on the server side is the model parameter whose version is V1. In other words, in the 4^{th} iteration, when the worker 2 requests, from the server, to obtain the group of to-be-trained model parameters needed for the 4^{th} iteration, the server may send the model parameter whose version is V1 to the worker 2 again, so that the worker 2 completes the 4^{th} iteration. In the fully asynchronous aggregation manner, a quantity of iterations performed by a worker by using a to-be-trained model parameter in a same version is not limited. When the worker requests, from the server, to obtain a to-be-trained model parameter during an iteration, the server only needs to send a model parameter in a latest version currently maintained to the worker.

In the foregoing descriptions, a manner in which the server aggregates a plurality of groups of trained model parameters when the worker publishes, by using a post command, a group of trained model parameters generated in one iteration is used for description. A manner in which the server aggregates a plurality of groups of trained model parameters when the worker publishes, by using a post command, a gradient of a model generated in one iteration is similar to the manner in which the server aggregates a plurality of groups of trained model parameters when the worker publishes, by using a post command, a group of trained model parameters generated in one iteration. A difference lies in that when the worker publishes, by using a post command, a gradient of a model generated in one iteration, the server needs to first adjust, based on the gradient of the model in the iteration, a to-be-trained model parameter to obtain a group of trained model parameters generated in the iteration, and then aggregates a plurality of groups of trained model parameters.

In addition, in embodiments of this application, because data on a side of a storage node 30 is organized in a form of an array, to adapt to this data organization form, a release (release) command is provided, so that a storage space occupied by the array can be released from the storage node 30 in time. The release command is used to request to release the array from the storage node 30.

For example, when a computing node 20 needs to release an array, the computing node 20 may send a release command to the storage node 30. The release command carries an array identifier. After receiving the array release command, the storage node 30 may delete the array indicated by the data identifier, and reclaim a storage space occupied by the array.

For fields in the release command, refer to Table 4. The fields in the release command listed in Table 4 are merely examples. The fields in the release command and definitions of the fields are not limited in embodiments of this application.

**Table 4**

| Offset (offset) | Length (length) | Field name (field) | Description (description) |
|---|---|---|---|
| 0 | 4 | System (system) | This field is reserved for transferring an address of an address space (Process Address Space Identifier, PASID) in CPU instructions. |
| 4 | 2 | Command identifier (command identifier, CID) | This field is a command identifier that identifies a pairing request/response. The CID is unique in each SQ. |
| 6 | 1 | Operation code (opcode) | The operation code indicates a type of a command. Different types are corresponding to different values of the operation code. For example, a value 11 indicates that the command is an array release command. |
| 7 | 1 | Option (options) | Reserved bits |
| 8 | 4 | Array identifier (array ID) | A numeric identifier identifies an array that needs to be accessed. |
| 12 | | Reserved bits (reserved) | Not used |
| One release command has a total of 16 bytes. | | | |

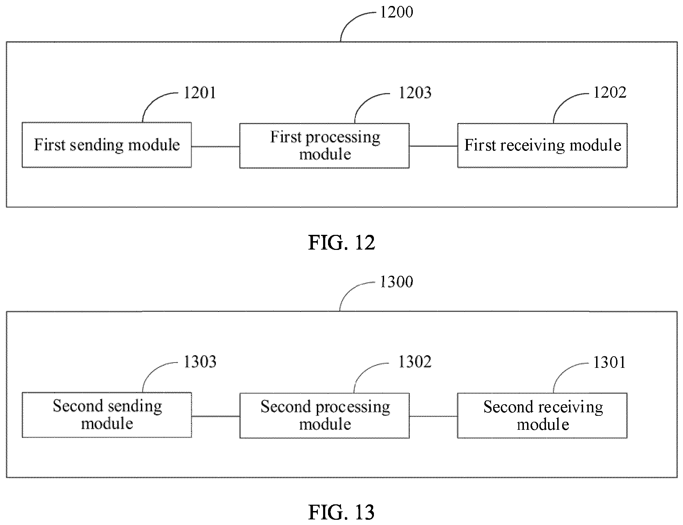

Based on a same inventive concept as the method embodiment, this application further provides a computing node. The computing node is configured to perform the method performed by the computing node 20 or the worker in the method example shown in FIG. 6. For related features, refer to the foregoing method example. Details are not described herein again. As shown in FIG. 12, the computing node 1200 includes a first sending module 1201 and a first receiving module 1202.

The first sending module 1201 is configured to send a get command to a storage node based on NVMe, where the get command is used to request to obtain one or more first elements from an array.

The first receiving module 1202 is configured to receive a response to the get command sent by the storage node, to obtain the one or more first elements.

In a possible implementation, the get command carries an identifier of the one or more first elements, and the identifier of the one or more first elements identifies the one or more first elements.

In a possible implementation, the one or more first elements are a to-be-trained model parameter needed to complete one iteration of model training by the computing node. The computing node 1200 further includes a first processing module 1203. The first processing module 1203 obtains the one or more first elements from the array based on the response to the get command, to complete the one iteration of the model training.

In a possible implementation, the get command carries an identifier of the array, and the identifier of the array identifies the array.

In a possible implementation, the first sending module 1201 sends a post command to the storage node based on the NVMe, where the post command is used to request to store one or more second elements in the array.

In a possible implementation, the one or more second elements are a trained model parameter generated through the one iteration of the model training by the first processing module 1203 by using the one or more first elements.

In a possible implementation, the post command carries an identifier of the one or more second elements.

In a possible implementation, an identifier of the one or more second elements that is carried in the post command is the same as the identifier of the one or more first elements that is carried in the get command.

In a possible implementation, the post command carries a version of the one or more second elements, and the version is used to indicate the one iteration for generating the one or more second elements.

Based on a same inventive concept as the method embodiment, this application further provides a storage node. The storage node is configured to perform the method performed by the storage node 30 or the server in the method example shown in FIG. 6. For related features, refer to the foregoing method example. Details are not described herein again. As shown in FIG. 13, the storage node 1300 includes a second sending module 1303, a second receiving module 1301, and a second processing module 1302.

The second receiving module 1301 is configured to receive, based on NVMe, a get command sent by a computing node, where the get command is used to request to obtain one or more first elements from an array.

The second processing module 1302 is configured to read the one or more first elements from the array based on the get command.

The second sending module 1303 is configured to send a response to the get command to feed back the one or more first elements.

In a possible implementation, the get command carries an identifier of the one or more first elements, and the identifier of the one or more first elements identifies the one or more first elements.

When reading the one or more first elements from the array based on the get command, the second processing module 1302 reads the one or more first elements from the array based on the identifier of the one or more first elements.

In a possible implementation, the one or more first elements are a to-be-trained model parameter needed to complete one iteration of model training by the computing node.

In a possible implementation, the get command carries an identifier of the array, and the identifier of the array identifies the array.

In a possible implementation, the second receiving module 1301 may further receive, based on the NVMe, a post command sent by the computing node, where the post command is used to request to store one or more second elements in the array. The second processing module 1302 updates the one or more second elements to the array based on the post command.

In a possible implementation, the one or more second elements are a trained model parameter generated through the one iteration of the model training by the computing node by using the one or more first elements. When updating the one or more second elements to the array, the second processing module 1302 updates the one or more first elements in the array by using the one or more second elements.

In a possible implementation, the post command carries an identifier of the one or more second elements.

In a possible implementation, an identifier of the one or more second elements that is carried in the post command is the same as the identifier of the one or more first elements that is carried in the get command.

In a possible implementation, the post command carries a version of the one or more second elements, and the version is used to indicate the one iteration for generating the one or more second elements.

In a possible implementation, the second processing module 1302 may further perform one round of aggregation, aggregate a plurality of groups of elements in the round of aggregation, and update an original obtained through the aggregation to the array, where each group of elements includes the one or more second elements.

It should be noted that division into modules in embodiments of this application is an example, is merely logical function division, and may be other division during actual implementation. Functional modules in embodiments of this application may be integrated into one processing module, or each of the modules may exist alone physically, or at least two modules may be integrated into one module. The integrated module may be implemented in a form of hardware, or may be implemented in a form of a software functional module.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer program instructions. When the computer program instructions are loaded or executed on a computer, all or some of the procedures or functions according to embodiments of the present invention are generated. The computer may be a general-purpose computer, a dedicated computer, a computer network, or another programmable apparatus. The computer program instructions may be stored in a computer-readable storage medium or may be transmitted from a computer-readable storage medium to another computer-readable storage medium. For example, the computer program instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, like a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid state drive (solid state drive, SSD).

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, and an optical memory) that include computer-usable program code.

This application is described with reference to the flowcharts and/or block diagrams of the method, the device (system), and the computer program product according to this application. It should be understood that computer program instructions may be used to implement each process in the flowcharts and/or each block in the block diagrams and a combination of a process in the flowcharts and/or a block in the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may be alternatively stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may be alternatively loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the scope of this application. In this way, this application is intended to cover these modifications and variations of this application provided that they fall within the scope defined by the following claims and equivalent technologies of this application.

The foregoing descriptions are merely specific implementations of this application. Any variation or replacement readily figured out by a person skilled in the art based on the specific implementations provided in this application shall fall within the protection scope of this application.

## Claims

1. A data access method, wherein the method comprises:
sending, by a computing node, a get get command to a storage node based on a non-volatile memory host controller interface NVMe, wherein the get command is used to request to obtain one or more first elements from an array;
reading, by the storage node, the one or more first elements from the array based on the get command; and
sending, by the storage node, a response to the get command to feed back the one or more first elements to the computing node.

2. The method according to claim 1, wherein the get command carries an identifier of the one or more first elements, and the identifier of the one or more first elements identifies the one or more first elements; and
the reading, by the storage node, the one or more first elements from the array based on the get command comprises:
reading, by the storage node, the one or more first elements from the array based on the identifier of the one or more first elements.

3. The method according to claim 1 or 2, wherein the one or more first elements are a to-be-trained model parameter needed to complete one iteration of model training by the computing node, and the method further comprises:
obtaining, by the computing node, the one or more first elements from the array based on the response to the get command, to complete the one iteration of the model training.

4. The method according to any one of claims 1 to 3, wherein the get command carries an identifier of the array, and the identifier of the array identifies the array.

5. The method according to any one of claims 1 to 4, wherein the method further comprises:
sending, by the computing node, a post post command to the storage node based on the NVMe, wherein the post command is used to request to store one or more second elements in the array; and
updating, by the storage node, the one or more second elements to the array based on the post command.

6. The method according to claim 5, wherein the one or more second elements are a trained model parameter generated through the one iteration of the model training by the computing node by using the one or more first elements, and the updating, by the storage node, the one or more second elements to the array comprises:
updating, by the storage node, the one or more first elements in the array by using the one or more second elements.

7. The method according to claim 5 or 6, wherein the post command carries an identifier of the one or more second elements.

8. The method according to claim 6, wherein an identifier of the one or more second elements that is carried in the post command is the same as the identifier of the one or more first elements that is carried in the get command.

9. The method according to claim 6, wherein the post command carries a version of the one or more second elements, and the version is used to indicate the one iteration for generating the one or more second elements.

10. The method according to any one of claims 1 to 9, wherein the method further comprises:
performing, by the storage node, one round of aggregation, aggregating, by the storage node, a plurality of groups of elements in the round of aggregation, and updating an original obtained through the aggregation to the array, wherein each group of elements comprises the one or more second elements.

11. A data access system, wherein the system comprises:
a computing node, configured to send a get get command to a storage node based on a non-volatile memory host controller interface NVMe, wherein the get command is used to request to obtain one or more first elements from an array; and
the storage node, configured to: read the one or more first elements from the array based on the get command, and send a response to the get command to feed back the one or more first elements to the computing node.

12. The system according to claim 11, wherein the get command carries an identifier of the one or more first elements, and the identifier of the one or more first elements identifies the one or more first elements; and
that the storage node reads the one or more first elements from the array based on the get command specifically comprises:
reading the one or more first elements from the array based on the identifier of the one or more first elements.

13. The system according to claim 11 or 12, wherein the one or more first elements are a to-be-trained model parameter needed to complete one iteration of model training by the computing node, and the computing node is further configured to obtain the one or more first elements from the array based on the response to the get command, to complete the one iteration of the model training.

14. The system according to any one of claims 11 to 13, wherein the get command carries an identifier of the array, and the identifier of the array identifies the array.

15. The system according to any one of claims 11 to 14, wherein the computing node is further configured to send a post post command to the storage node based on the NVMe, wherein the post command is used to request to store one or more second elements in the array; and
the storage node is further configured to update the one or more second elements to the array based on the post command.

16. The system according to claim 15, wherein the one or more second elements are a trained model parameter generated through the one iteration of the model training by the computing node by using the one or more first elements, and that the storage node updates the one or more second elements to the array specifically comprises:
updating the one or more first elements in the array by using the one or more second elements.

17. The system according to claim 15 or 16, wherein the post command carries an identifier of the one or more second elements.

18. The system according to claim 16, wherein an identifier of the one or more second elements that is carried in the post command is the same as the identifier of the one or more first elements that is carried in the get command.

19. The system according to claim 16, wherein the post command carries a version of the one or more second elements, and the version is used to indicate the one iteration for generating the one or more second elements.

20. The system according to any one of claims 11 to 19, wherein the storage node is further configured to:
perform one round of aggregation, aggregate a plurality of groups of elements in the round of aggregation, and update an original obtained through the aggregation to the array, wherein each group of elements comprises the one or more second elements.

21. A storage node, wherein the storage node comprises a non-volatile memory host controller interface NVMe controller and a storage medium;
the storage medium is configured to store data in a form of an array, wherein the array comprises one or more elements; and
the NVMe controller is configured to: receive, based on NVMe, a get get command sent by a computing node, read the one or more first elements from the array based on the get command, and send a response to the get command to feed back the one or more first elements to the computing node.

22. The storage node according to claim 21, wherein the get command carries an identifier of the one or more first elements, and the identifier of the one or more first elements identifies the one or more first elements; and
that the NVMe controller reads the one or more first elements from the array based on the get command specifically comprises:
reading the one or more first elements from the array based on the identifier of the one or more first elements.

23. The storage node according to claim 21 or 22, wherein the one or more first elements are a to-be-trained model parameter needed to complete one iteration of model training by the computing node.

24. The storage node according to any one of claims 21 to 23, wherein the get command carries an identifier of the array, and the identifier of the array identifies the array.

25. The storage node according to any one of claims 21 to 24, wherein the NVMe controller is further configured to: receive, based on the NVMe, a post post command sent by the storage node, wherein the post command is used to request to store one or more second elements in the array; and update the one or more second elements to the array based on the post command.

26. The storage node according to claim 25, wherein the one or more second elements are a trained model parameter generated through the one iteration of the model training by the computing node by using the one or more first elements, and that the NVMe controller updates the one or more second elements to the array specifically comprises:
updating the one or more first elements in the array by using the one or more second elements.

27. The storage node according to claim 25 or 26, wherein the post command carries an identifier of the one or more second elements.

28. The storage node according to claim 26, wherein an identifier of the one or more second elements that is carried in the post command is the same as the identifier of the one or more first elements that is carried in the get command.

29. The storage node according to claim 26, wherein the post command carries a version of the one or more second elements, and the version is used to indicate the one iteration for generating the one or more second elements.

30. The storage node according to any one of claims 21 to 29, wherein the NVMe controller is further configured to:
perform one round of aggregation, aggregate a plurality of groups of elements in the round of aggregation, and update an original obtained through the aggregation to the array, wherein each group of elements comprises the one or more second elements.

31. A computer storage medium, wherein the computer-readable storage medium stores computer-executable instructions, and the computer-executable instructions are used by a computer to perform the method according to any one of claims 1 to 10.
